# EUROPÄISCHE PATENTSCHRIFT

(11) **EP 3 899 423 B1**
(45) Veröffentlichungstag und Bekanntmachung des Hinweises auf die Patenterteilung: **10.04.2024**
(21) Anmeldenummer: 19835651.1
(22) Anmeldetag: 19.12.2019
(51) Int. Cl.: G01B 11/25, G01N 21/95, G01M 11/00, G01M 11/02

(54) **VORRICHTUNG, VERMESSUNGSSYSTEM UND VERFAHREN ZUR ERFASSUNG EINER ZUMINDEST TEILWEISE SPIEGELNDEN OBERFLÄCHE UNTER VERWENDUNG ZWEIER SPIEGELUNGSMUSTER**
DEVICE, MEASUREMENT SYSTEM AND METHOD FOR CAPTURING AN AT LEAST PARTLY REFLECTIVE SURFACE USING TWO REFLECTION PATTERNS
DISPOSITIF, SYSTÈME DE MESURE ET PROCÉDÉ POUR LA DÉTECTION D'UNE SURFACE AU MOINS PARTIELLEMENT RÉFLÉCHISSANTE PAR L'UTILISATION DE DEUX MOTIFS DE RÉFLEXION

(30) Priorität: 21.12.2018 DE 102018222888; 30.01.2019 DE 102019201208; 31.01.2019 DE 102019201272
(43) Veröffentlichungstag der Anmeldung: 27.10.2021
(73) Patentinhaber: Fraunhofer-Gesellschaft zur Förderung der angewandten Forschung e.V., 80686 München (DE)
(72) Erfinder: SCHMITT, Peter, 91058 Erlangen (DE); KOSTKA, Günther, 91058 Erlangen (DE); SEIFERT, Lars, 91058 Erlangen (DE); BAUMGÄRTNER, Carina, 91058 Erlangen (DE)
(74) Vertreter: König, Andreas Rudolf
(86) Internationale Anmeldenummer: PCT/EP2019/086451
(87) Internationale Veröffentlichungsnummer: WO 2020/127828

(56) Entgegenhaltungen:
- DE-A1-102006 033 779
- US-A- 5 122 672
- US-A- 6 100 990
- US-A1- 2008 192 243
- US-A1- 2008 225 303
- US-A1- 2017 191 946

## Beschreibung

Die vorliegende Erfindung bezieht sich auf eine Vorrichtung, ein Vermessungssystem und ein Verfahren zur Erfassung von zumindest teilweise spiegelnden Oberflächen unter Verwendung zweier per Spiegelung erhaltener Spiegelungsmuster. Die vorliegende Erfindung bezieht sich ferner auf eine inverse Deflektometrie sowie auf eine Formvermessung zumindest teilweise spiegelnder Oberflächen.

Für die schnelle berührungslose Formvermessung von spiegelnden Objekten fehlt es an optischen Messmethoden, mit denen die Form des Objekts direkt und eindeutig gemessen werden kann. Beispielsweise werden für die optische Qualitätskontrolle von Brillengläsern bislang häufig an einzelnen Stichproben mithilfe der sogenannten phasenmessenden Deflektometrie (PMD) Messungen durchgeführt. Bei der Rekonstruktion der Ist-Form wird von einer bekannten Soll-Form ausgegangen. Dadurch ist man in der Lage, kleine Abweichungen von der Soll-Form zu bestimmen. Aufgrund des Deflektometrie-Messprinzips gibt es für jeden detektierten Lichtstrahl unendlich viele mögliche Kombinationen aus Ortsposition und Neigungswinkel der zu vermessenden Oberfläche, wodurch es keine eindeutige mathematische Lösung für die Positions-Winkel-Kombination gibt. Dies wird häufig als Winkel-Höhe-Mehrdeutigkeit bezeichnet. Die Formvermessung von unbekannten Oberflächenformen ist damit prinzipbedingt nicht möglich oder nur eingeschränkt möglich.

Eine bekannte Variante der PMD-Methode für die Lösung der Positions-Winkel-Mehrdeutigkeit ist die Stereodeflektometrie, bei der die Oberfläche mit zwei Kameras unter unterschiedlichen Winkeln beobachtet wird. Durch den Vergleich der potentiellen Normalenfelder beider Kameras kann auf die wahre Normale zurückgeschlossen werden.

Bei PMD-basierten Prüfverfahren wird typischerweise die Rückseite des Brillenglases mattiert und geschwärzt, damit das projizierte Muster nur an der zu messenden Seite des Brillenglases reflektiert wird. Aufgrund der Mattierung kann der Prüfling nach der Messung aber nicht mehr als Brillenglas verwendet werden. Eine 100-%-Kontrolle der Fertigung ist damit nicht möglich.

In EP 3 199 943 B1 wird eine Vorrichtung und ein Verfahren zur Erfassung einer zumindest teilweise spiegelnden Oberfläche beschrieben. Dieses Verfahren der inversen Deflektometrie kann zur Detektion von lokalen Formabweichungen auf spiegelnden Oberflächen genutzt werden. Da dieses Verfahren nicht die Mehrdeutigkeit von Position und Winkel aufhebt, eignet es sich jedoch nur bedingt für die Formvermessung von spiegelnden Objekten. Eine besondere Schwierigkeit ist zudem, dass es entlang des vorgeschlagenen Laser-Fächerstrahls nicht möglich ist, einen bestimmten Strahl des Fächers von Nachbarstrahlen zu unterscheiden, so dass keine Information über die Ablenkung des Laserstrahls innerhalb der Laserebene gewonnen werden kann.

DE 10 2006 033 779 A1 beschreibt ein Verfahren, bei dem ein Umlenkspiegel mit einem Laserstrahl so beaufschlagt wird, dass der umgelenkte Laserstrahl in einem Punkt der reflektierenden Fläche auftrifft.

US 5,122,672 A beschreit ein Verfahren und eine Vorrichtung zum Messen der Qualität einer fertigen Oberfläche durch Projizieren eines Paars paralleler Lichtstrahlen auf die Oberfläche und Reflektieren der Strahlen entlang eines Referenzstrahls auf einen Bildschirm, wo sie elektronisch aufgezeichnet und mit dem Referenzbild verglichen werden.

US 2008/192243 A1 beschreibt ein Verfahren zum Erfassen von spiegelnden Oberflächenfehlern auf einem beschichteten Substrat, das das Auftreffen sichtbarer, nicht integrierter elektromagnetischer Strahlung von einer ersten Quelle auf das beschichtete Substrat und das Reflektieren der sichtbaren, nicht integrierten elektromagnetischen Strahlung von dem beschichteten Substrat in eine erste lichtempfindliche Vorrichtung umfasst.

US 2017/191946 A1 beschreibt eine dynamische photometrische Stereo-Inspektionstechnik zur Erfassung und Analyse der Topographie einer sich bewegenden Oberfläche.

US 6,100,990 A beschreibt ein Verfahren zum Bestimmen der optischen Reflexionsqualität eines reflektierenden Produkts, das das Reflektieren eines ersten Graustufenmusters von dem Produkt umfasst

US 2008/225303 A1 beschreibt eine Vorrichtung und ein Verfahren, die 3D-Erfassung von spiegelnden Objekten ermöglichen, die für sichtbares Licht transparent sind.

Wünschenswert wären Vorrichtungen, Vermessungssysteme und Verfahren, die die oben genannten Nachteile überwinden und insbesondere eine präzise Vermessung unbekannter zumindest teilweise spiegelnder Objekte ermöglichen.

Diese Aufgabe wird durch den Gegenstand der unabhängigen Patentansprüche gelöst.

Der Kerngedanke der vorliegenden Erfindung besteht darin, erkannt zu haben, dass obige Aufgabe dadurch gelöst werden kann, dass durch Erzeugen eines ersten Spiegelungsmusters und eines zweiten Spiegelungsmusters durch Spiegelung eines Beleuchtungsmusters an einer zumindest teilweise spiegelnden Oberfläche und durch Erfassung der Spiegelungsmuster von einer Detektionsflächenanordnung zwei Informationsquellen bezüglich der Spiegelung durch die zumindest teilweise spiegelnde Oberfläche erhalten werden kann. Hierdurch lässt sich die Positions-Winkel-Mehrdeutigkeit reduzieren oder auflösen, was zu präzisen Ergebnissen führt und die Nachteile aus dem Stand der Technik reduziert bzw. vermeidet.

Gemäß einem Ausführungsbeispiel umfasst eine Vorrichtung zur Erfassung von zumindest teilweise spiegelnden Oberflächen eine Detektionsflächenanordnung mit einer oder mehreren Detektionsflächen. Die Vorrichtung umfasst eine Beleuchtungseinrichtung, die ausgebildet ist, um ein Beleuchtungsmuster, d. h. ein oder mehrere Beleuchtungssignale, in Richtung der zumindest teilweise spiegelnden Oberfläche auszusenden, um per Spiegelung über die zumindest teilweise spiegelnde Oberfläche ein erstes Spiegelungsmuster und ein zweites Spiegelungsmuster auf die Detektionsflächenanordnung zu projizieren. Die Vorrichtung umfasst eine Erfassungseinheit, die ausgebildet ist, um das erste Spiegelungsmuster und das zweite Spiegelungsmuster von der Detektionsflächenanordnung zu erfassen.

Vorteilhaft an dieser Ausführungsform ist, dass sich eine Krümmung oder ein Oberflächenfehler der zumindest teilweise spiegelnden Oberfläche bzw. des zumindest teilweise spiegelnden Körpers in den beiden Spiegelungsmustern unterschiedlich auswirken kann, so dass die Positions-Winkel-Mehrdeutigkeit gering oder aufgelöst ist.

Gemäß einem Ausführungsbeispiel umfasst ein Vermessungssystem eine derartige Vorrichtung.

Vorteilhaft an dieser Ausführungsform ist, dass das Vermessungssystem eine Vielzahl von Formen zumindest teilweise spiegelnder Körper erfassen kann.

Gemäß einem Ausführungsbeispiel umfasst ein Verfahren zur Erfassung von zumindest teilweise spiegelnden Oberflächen ein Anordnen einer Detektionsflächenanordnung, ein Aussenden eines Beleuchtungsmusters in Richtung der zumindest teilweise spiegelnden Oberfläche, um per Spiegelung über die zumindest teilweise spiegelnde Oberfläche ein erstes Spiegelungsmuster und ein zweites Spiegelungsmuster auf die Detektionsflächenanordnung zu projizieren. Das Verfahren umfasst ein Erfassen des ersten Spiegelungsmusters und des zweiten Spiegelungsmusters von der Detektionsflächenanordnung.

Weitere vorteilhafte Ausführungsformen sind der Gegenstand der abhängigen Patentansprüche. Bevorzugte Ausführungsbeispiele der vorliegenden Erfindung werden nachfolgend bezugnehmend auf die beiliegenden Zeichnungen erläutert. Es zeigen:
- Fig. 1: eine schematische Seitenschnittansicht einer Vorrichtung zur Erfassung einer zumindest teilweise spiegelnden Oberfläche gemäß einem Ausführungsbeispiel;
- Fig. 2a: eine schematische Seitenschnittansicht einer Vorrichtung gemäß einem Ausführungsbeispiel, bei der eine Beleuchtungseinrichtung zwei Lichtquellen oder Beleuchtungsquellen aufweist;
- Fig. 2b: eine weitere Seitenschnittansicht der Vorrichtung aus Fig. 2a;
- Fig. 2c: eine schematische Seitenschnittansicht einer Vorrichtung gemäß einem Ausführungsbeispiel, die ausgebildet ist, um aus einem einzelnen Beleuchtungsmuster zwei Spiegelungsmuster zu erzeugen;
- Fig. 2d: eine schematische Seitenschnittansicht eines Teils einer Vorrichtung mit einem Strahlteiler gemäß einem Ausführungsbeispiel;
- Fig. 3a: schematische Diagramme eines Beleuchtungsmusters gemäß einem Ausführungsbeispiel, das in hierin beschriebenen Ausführungsbeispielen verwendet werden kann;
- Fig. 3b: einen schematischen Graphen eines weiteren Beleuchtungsmusters gemäß einem Ausführungsbeispiel, das eine Vielzahl von Punkten aufweist, die entlang einer Linie angeordnet sind;
- Fig. 4: eine schematische Seitenschnittansicht einer Vorrichtung gemäß einem Ausführungsbeispiel, die eine Detektionsflächenanordnung mit zumindest zwei voneinander getrennte Detektionsflächen aufweist;
- Fig. 5a: eine schematische Seitenschnittansicht einer Vorrichtung gemäß einem Ausführungsbeispiel, bei der die Beleuchtungseinrichtung ausgebildet ist, um das Beleuchtungsmuster in Richtung eines Objekts oder Körpers auszusenden, das die zumindest teilweise spiegelnde Oberfläche aufweist;
- Fig. 5b: eine schematische Seitenschnittansicht einer Vorrichtung mit einer gegenüber der Vorrichtung aus Fig. 5a doppelt ausgeführten Beleuchtungseinrichtung; und
- Fig. 6: ein schematisches Flussdiagramm eines Verfahrens gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

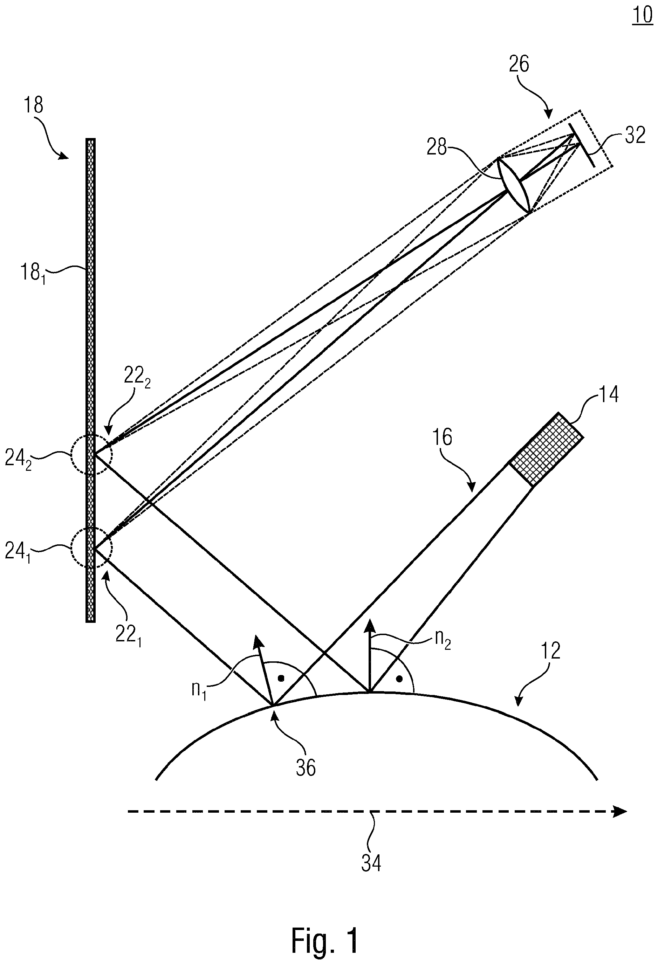

Fig. 1 zeigt eine schematische Seitenschnittansicht einer Vorrichtung 10 zur Erfassung einer zumindest teilweise spiegelnden Oberfläche 12. Die zumindest teilweise spiegelnde Oberfläche 12 kann zumindest bereichsweise spiegelnd und/oder reflektierend ausgebildet sein und bspw. eine spiegelnde metallische Oberfläche sein, kann aber auch aus einem anderen Material gebildet sein, wobei sich manche der hierin beschriebenen Ausführungsbeispiele beispielsweise auf die Vermessung optischer Körper, insbesondere Linsenkörper, etwa Brillengläser oder dergleichen, beziehen. Es ist alternativ oder zusätzlich möglich, dass die zumindest teilweise spiegelnde Oberfläche Teil eines lackierten Bleches oder einer Spiegeloberfläche ist. Ein lackiertes Blech kann ein Glanz-lackiertes, transparent lackiertes metallisch spiegelndes Blech sein. Die zumindest teilweise spiegelnde Oberfläche kann alternativ eine keramische Fläche sein, die vermessen und/oder überprüft werden soll. Alternativ ermöglicht die Vorrichtung 10 beispielsweise eine Vermessung anderer glänzender technischer Oberflächen.

Auch wenn sich nachfolgende Ausführungen auf teilweise spiegelnde Oberflächen 12 in Form von Brillengläsern beziehen, gelten die Ausführungen, sofern dort nicht anders erläutert, auch für andere zumindest teilweise spiegelnde Oberflächen, wie etwa die gerade genannten.

Eine Beleuchtungseinrichtung 14 ist ausgebildet, um ein Beleuchtungsmuster 16 in Richtung der zumindest teilweise spiegelnden Oberfläche 12 auszusenden. Das Beleuchtungsmuster 16 kann ein oder mehrere Einzelmuster umfassen. Mehrere Einzelmuster können zeitlich sequenziell oder gleichzeitig produziert werden, was im Zusammenhang mit Ausführungsbeispielen detailliert beschrieben wird. Das Beleuchtungsmuster wird an der zumindest teilweise spiegelnden Oberfläche 12 zumindest teilweise gespiegelt. Durch die Spiegelung erfolgt eine Richtungsumlenkung des Strahlengangs. Durch die Richtungsumlenkung wird der Strahlengang hin zu einer Detektionsfläche 18₁ einer Detektionsflächenanordnung 18 gelenkt, so dass zumindest ein erstes Spiegelungsmuster 22, und ein zweites Spiegelungsmuster 22₂ erzeugt oder erhalten wird. Die Beleuchtungseinrichtung 14 ist ausgebildet, um ein oder mehrere Muster, wie etwa einen Lichtpunkt, einen oder mehrere Linien, ein Streifenmuster oder ein beliebiges anderes Muster, per Spiegelung an der zumindest teilweise spiegelnden Oberfläche 12 auf die Detektionsfläche 18₁ zu projizieren. Eine Position 24₁ des ersten Spiegelungsmusters 22₁ bzw. eine Position 24₂ des zweiten Spiegelungsmusters 22₂ ist dabei abhängig von einer lokalen Oberflächenneigung mit einer Oberflächennormalen n₁ bzw. n₂ an Orten und von den Orten 36 selbst, an denen das Beleuchtungsmuster 16 auf die zumindest teilweise spiegelnde Oberfläche 12 trifft. Die Positionen 24, und 24₂ sind ferner abhängig von einem Bestrahlungswinkel zwischen der Beleuchtungseinrichtung 14 und den Oberflächennormalen n₁ und n₂.

Die Spiegelungsmuster 22₁ und/oder 22₂ können unter Verwendung von Licht, insbesondere Laserlicht, projiziert werden, etwa unter Verwendung eines Laserlicht-Projektors als Beleuchtungsquelle 14₁ und/oder 14₂. Es können auch andere Quellen verwendet werden, die geeignet sind, um ein Muster auf der zumindest teilweise spiegelnden Oberfläche zu erzeugen. Das bedeutet, dass die Beleuchtungsquelle 14 eine beliebige Lichtquelle zum Erzeugen eines definierten Musters, etwa LED, Xenon-Lampen, Quecksilber-Lampen oder dergleichen, ggf. unter Verwendung von Blenden oder dergleichen verwendet werden können und eine Verwendung eines Laserlicht-Projektors zwar bevorzugt sein kann aber nicht obligatorisch ist. Der Laserlicht-Projektor kann ausgebildet sein, um eine strukturierte Intensitätsverteilung auszusenden, etwa in Form eines Laser-Fächerstrahls. Vorteilhaft an einem unter Verwendung von Laserlicht projizierten Spiegelungsmuster ist, dass aufgrund einer größeren Rayleigh-Länge des Lasers, beispielsweise gegenüber einem gebündelten Licht einer Projektionslampe, ein vergrößerter Tiefenschärfebereich des Lasers genutzt werden kann. Alternativ oder zusätzlich kann die Beleuchtungseinrichtung 14 ausgebildet sein, um kurzwellige oder besonders kurzwellige Strahlung, etwa ultraviolettes (UV) oder extrem ultraviolettes (XUV) Licht, zu emittieren, um eine besonders hoch aufgelöste Abtastung der zumindest teilweise spiegelnden Oberfläche 12 zu erzielen. Eine hoch fokussierte UV- oder XUV-Strahlung ermöglicht basierend auf der geringeren Wellenlänge eine hoch aufgelöste Oberflächenabtastung. Alternativ oder zusätzlich kann die Beleuchtungseinrichtung 14 ausgebildet sein, um eine langwellige Strahlung, etwa ein infrarotes (IR) Licht zu emittieren.

Vorteilhaft an diesen Ausführungsformen ist, dass ein Oberflächenfehler auf der zumindest teilweise spiegelnden Oberfläche 12 gegebenenfalls mit einer Vergrößerungsfunktion an der Detektionsfläche 18₁ indirekt erfasst werden kann. Dies ermöglicht eine Reduzierung von störenden Einflüssen, wie sie bspw. aufgrund von Spiegelungen auftreten können. Gleichzeitig kann Licht mit einer geringen Wellenlänge eingesetzt werden, um eines oder beide der Spiegelungsmuster 22₁ und 22₂ an die Detektionsfläche 18₁ zu projizieren, so dass Oberflächenfehler mit einer geringen räumlichen Ausdehnung detektierbar sind. Eine Trennung der Spiegelungsmuster unterschiedlicher Wellenlängen kann dennoch möglich sein, etwa unter Verwendung von Farbfiltern in einer Erfassungseinrichtung.

Die Beleuchtungseinrichtung 14 kann eine Beleuchtungsquelle zum Erzeugen eines definierten Musters aufweist. Diese Muster kann zeitlich sequentiell mehrfach auf die zumindest teilweise spiegelnde Oberfläche projiziert werden, um mehrere Spiegelungsmuster zu erhalten. Alternativ kann eine gleichzeitigte Projektion erfolgen, wofür mehrere Beleuchtungsquellen gleichzeitig verwendet werden können, um gleiche oder unterschiedliche Muster zu erzeugen. Zum Erzeugen zweier oder mehrerer gleicher Muster kann auch eine Anordnung mit einer gemeinsamen Lichtquelle genutzt werden, die mit einem Strahlteiler kombiniert ihr Muster mehrfach oder vielfach bereitstellt. Anders ausgedrückt kann die Beleuchtungseinrichtung 14 eine oder mehrere, insbesondere zwei, Beleuchtungsquellen aufweisen, die jeweils aber unabhängig voneinander als Laserquellen, insbesondere Linien-Projektoren, implementiert sein können. Die Beleuchtungsquellen können ausgebildet sein, um einen Lichtfächerstrahl auf die Detektionsfläche 18₁ zu projizieren. Das Spiegelungsmuster 22₁ und/oder 22₂ kann aus Licht, insbesondere Laserlicht, geformt sein, welches sichtbare Wellenlängen aufweist. Alternativ oder zusätzlich kann das Licht, welches das Muster projiziert, auch andere Wellenlängen aufweisen, beispielsweise UV-, XUV- und/oder IR-Licht. Derartige für das menschliche Auge oder eine Erfassungseinheit 26 möglicherweise unsichtbare Wellenlängen können in insbesondere für die Erfassungseinheit 26 sichtbares Licht umgewandelt werden. In für das menschliche Auge sichtbares Licht umgewandeltes und von der Detektionsfläche 18₁ gestreutes Licht kann von konventionellen Silizium-basierten Kamera-Sensoren erfasst werden. Alternativ oder zusätzlich ist es möglich, für einen weiteren oder den gleichen Prüfvorgang unterschiedliche Wellenlängen einzusetzen, um beispielsweise verschiedene Tiefen- oder Prüfbereiche der zumindest teilweise spiegelnden Oberfläche 12 zu erfassen.

Die Detektionsfläche 18₁ kann beispielsweise eine diffus streuende nicht-transparente Streufolie sein, die von der Erfassungseinheit 26 aus einer Richtung, aus der das Spiegelungsmuster 22₁ und/oder 22₂ auf die Detektionsfläche 18₁ projiziert wird (Einfallsseite) über eine konventionelle Abbildungsoptik 28 der Erfassungseinheit 26 und/oder eine Detektorfläche 32 einer elektronischen Flächenkamera erfasst wird. Die Erfassungseinheit 26 kann eine Kamera zur Positionsbestimmung des Spiegelungsmusters, d. h., zur Bestimmung einer Position des Spiegelungsmusters 22₁ und/oder 22₂ global und/oder relativ zueinander umfassen. Hierfür können Kameras mit integrierter Bildauswertung verwendet werden, etwa 3D-Kameras. Die Erfassungseinheit 26 kann alternativ oder zusätzlich beispielsweise eine Lichtschnittkamera umfassen.

Alternativ kann die Detektionsfläche 18, auch zumindest teilweise transparent sein, wie etwa eine halb transparente Streufolie, so dass das Muster von einer der Einfallsseite abgewandten Seite der Detektionsfläche 18₁ erfassbar ist. So kann beispielsweise ein Spiegelungsmuster, das von einem UV- oder XUV-Laser auf die Detektionsfläche 18₁ projiziert wird, durch phosphoreszierende oder fluoreszierende Stoffe an der Detektionsfläche 18₁ in sichtbares Licht umgewandelt und gestreut werden, so dass das Muster auf der der Einfallsseite abgewandten Seite sichtbar und mithin von der Erfassungseinheit 26 erfassbar ist, wenn diese angeordnet ist, um die der Einfallsseite abgewandte Seite der Detektionsfläche 18₁ zu erfassen.

Die Erfassungseinheit 26, wie etwa eine Flächen- oder Zeilenkamera, kann beispielsweise als eine elektronische Kamera ausgebildet sein, um die Detektionsfläche 18₁ zu erfassen, beispielsweise indem die Erfassungseinheit 26 eine kontinuierliche oder diskontinuierliche Abfolge von Bildern der auf die Detektionsfläche 18₁ projizierten Spiegelungsmuster 22₁ und 22₂ aufnimmt. Hierzu kann die Erfassungseinheit 26 die Abbildungsoptik 28 aufweisen. Ferner kann die Erfassungseinheit 26 die Detektorfläche 32 aufweisen, wie etwa einen Kamera-Chip oder einen sonstigen Bildsensor. Die Abbildungsoptik 28 kann ausgebildet sein, einen variierenden Abstand zwischen der zumindest teilweise spiegelnden Oberfläche 12, der Beleuchtungseinrichtung 14 und/oder der Detektionsfläche 18₁ so zu kompensieren, dass ein fokussiertes Abbild des Musters auf den Bildsensor 32 abgebildet werden kann. Der Bildsensor 32 kann einen oder mehrere beispielsweise Silizium-basierte Sensoren aufweisen, insbesondere wenn das Muster in Licht sichtbare Wellenlänge an der Detektionsfläche 18₁ gestreut wird. Es kann jedoch alternativ oder zusätzlich ebenfalls vorgesehen sein, dass die Beleuchtungseinrichtung 14 ausgebildet ist, um bei der Projektion des Beleuchtungsmusters 16 auf die Detektionsflächenanordnung 18 einen veränderlichen Abstand zwischen der Beleuchtungseinrichtung 14 und der zumindest teilweise spiegelnden Oberfläche 12 zu berücksichtigen und eine Fokussierung auf die Detektionsfläche 18₁ vorzunehmen.

Die Positionen 24₁ und 24₂ können über entsprechende Positionen auf der Detektorfläche 32 bestimmt werden.

In Fig. 1 ist dargestellt, dass die Spiegelungsmuster 22₁ und 22₂ durch Spiegelung an unterschiedlichen Orten mit den Oberflächennormalen n₁ bzw. n₂ erhalten werden. Eine Auflösung der Positions-Winkel-Mehrdeutigkeit ist beispielsweise dann möglich, wenn die beiden Spiegelungsmuster 22₁ und 22₂ auf einen selben Ort an der zumindest teilweise spiegelnden Oberfläche 12 bezogen werden. Dies kann dadurch erhalten werden, dass beispielsweise die zumindest teilweise spiegelnde Oberfläche 12 entlang einer relativen Bewegungsrichtung 34 bewegt wird, so dass beispielsweise ein zu einem ersten Zeitpunkt aufgenommenes erstes Spiegelungsmuster 22₁ mit einem zu einem zweiten Zeitpunkt aufgenommenen Spiegelungsmuster 22₂ korreliert werden kann, wobei bevorzugt diejenigen Aufnahmen miteinander korreliert oder in Zusammenhang gebracht werden, zu denen das jeweilige Beleuchtungssignal am selben Ort der zumindest teilweise spiegelnden Oberfläche 12 gespiegelt wurde. Das bedeutet, die Vorrichtung kann ausgebildet sein, um einen Oberflächenpunkt 36 eines zu vermessenden Objekts bzw. der zumindest teilweise spiegelnden Oberfläche 12 zu einem ersten Zeitpunkt mit einem ersten Beleuchtungsmuster zu beleuchten, um das Spiegelungsmuster 22₁ zu erhalten, und um den Oberflächenpunkt 36 zu einem zweiten, verschiedenen Zeitpunkt, das bedeutet zeitlich davor oder danach, mit einem zweiten Beleuchtungsmuster zu beleuchten, um das Spiegelungsmuster 22₂ zu erhalten.

Die Bewegungsrichtung 34 kann eine laterale oder translatorische Bewegungsrichtung sein, kann alternativ aber auch zumindest einen rotatorischen Anteil umfassen. Beide Bewegungskomponenten können einzeln, aber auch in Kombination dazu genutzt werden, um sämtliche zu untersuchenden Punkte der zumindest teilweise spiegelnden Oberfläche 12 mit dem Beleuchtungsmuster 16 zu beleuchten. Die Relativbewegung kann dabei sowohl durch eine Bewegung der zumindest teilweise spiegelnden Oberfläche 12 gegenüber der Messanordnung als auch durch eine Bewegung der Messanordnung gegenüber der zumindest teilweise spiegelnden Oberfläche 12 erfolgen, wobei auch eine Kombination hiervon möglich ist.

Zum Erzeugen der relativen Bewegung, etwa entlang der relativen Bewegungsrichtung 34 kann die Vorrichtung 10 eine Positioniereinheit aufweisen, die ausgebildet ist, um eine Relativbewegung zwischen der Beleuchtungseinrichtung und der Detektionsflächenanordnung 18 einerseits und der zumindest teilweise spiegelnden Oberfläche andererseits auszuführen, wobei hierfür die Beleuchtungseinrichtung zusammen mit der Detektionsflächenanordnung und/oder die zumindest teilweise spiegelnde Oberfläche bewegt werden kann. Die Relativbewegung kann eine translatorische Bewegung und/oder eine rotatorische Bewegung umfassen. Die Vorrichtung 10 kann eine ebenfalls nicht dargestellte Wegmesseinrichtung aufweisen, die ausgebildet ist, um die Verschiebung oder Bewegung der zumindest teilweise spiegelnden Oberfläche zu erfassen oder zu messen. Durch eine hierdurch erhaltene und möglichst exakte Kenntnis der mit der Positioniereinrichtung bewirkten Verschiebung kann eine exakte Verknüpfung der Spiegelungsmuster erhalten werden, da exakt bestimmt werden kann, wann die Muster an dem gleichen Punkt oder Bereich der zumindest teilwiese spiegelnden Oberfläche projiziert wird.

Die Erfassungseinheit 26 kann eine 3D-Messkamera, wie etwa eine Lichtschnitt-Kamera, umfassen. Diese können Messraten von über 10000 Profilmessungen pro Sekunde erreichen. Durch eine sequenzielle, hochfrequente Messung der Spiegelungsmuster 22₁ und/oder 22₂ auf der Detektionsfläche 18₁ während der Relativbewegung 34 zwischen der Messanordnung, d. h. der Beleuchtungseinrichtung 14 und der Detektionsflächenanordnung 18 sowie gegebenenfalls der Erfassungseinheit 26 einerseits und der zumindest teilweise spiegelnden Oberfläche 12 andererseits, kann eine teilweise oder vollständige Erfassung der zumindest teilweise spiegelnden Oberfläche 12 erreicht werden. Eine Lichtschnitt-Messkamera kann eine schnelle Positionsbestimmung eines Lichtlinien-Musters bzw. der Position einer Lichtlinie auf der Detektionsfläche 18₁ ermöglichen, so dass eine Datenreduktion auf dem Bildsensor 32 oder in der Erfassungseinheit 26 durchführbar ist. Dazu kann die Erfassungseinheit 26 eine lokale Auswerteeinheit umfassen, die ausgebildet ist, um beispielsweise das erfasste Bild spaltenweise bezüglich zumindest eines lokalen oder globalen Intensitätsmaximums auszuwerten. Mehrere lokale Intensitätsmaxima können beispielsweise ausgewertet werden, wenn beide Spiegelungsmuster 22₁ und 22₂ gemeinsam von der Erfassungseinheit 26 erfasst werden, etwa bei einer Projektion auf eine gemeinsame Detektionsfläche 18₁. Mehrere lokale Intensitätsmaxima können beispielsweise ausgewertet werden, wenn die Spiegelungsmuster 22₁ und 22₂ jeweils individuell von einer individuell zugeordneten Erfassungseinheit erfasst werden, etwa bei einer Projektion auf eine jeweilige Detektionsfläche 18₁ der Detektionsflächenanordnung 18.

Die Erfassungseinheit kann ausgebildet sein, um den oder die korrespondierenden Zeilenwerte des lokalen oder globalen Maximums als Skalar auszugeben. Insbesondere ermöglicht solch eine Positionsbestimmung eine erste Datenreduktion und mithin eine schnelle Übermittlung einzelner Bilder an eine Auswerteeinrichtung, da anstelle von vollständigen Bildern lediglich die extrahierten Positionsinformationen übertragen werden. Zusätzlich kann eine Reihe von zusätzlichen Informationen, wie etwa eine Intensität der ausgewerteten Lichtlinie pro Messpunkt oder eine Linienbreite pro Messpunkt bereitgestellt werden. Diese zusätzlichen Informationen oder Daten können durch zusätzliche Auswerte-Schritte ausgewertet werden. So kann beispielsweise aus einer im Ortsraum hochfrequenten Änderung einer Helligkeit oder einer Breite einer Linie in Kombination mit der Auswertung des Positionsverlaufs der Linie auf die Existenz eines Defekts geschlossen werden.

Beispielsweise kann das Ausbleiben von zumindest Teilen des Musters in einem bestimmten Bereich der Detektionsfläche 18₁ auf einen Fehler hindeuten. Wird etwa an der zumindest teilweise spiegelnden Oberfläche 12 eine kontinuierliche Krümmung zwischen zwei zueinander geneigten Abschnitten der zumindest teilweise spiegelnden Oberfläche 12 erwartet, so kann die kontinuierliche Krümmung dazu führen, dass das Muster aufgrund der Krümmung einen bestimmten Bereich an der Detektionsfläche 18₁ durchwandert. Weist das Bauteil einen Fehler, beispielsweise einen knickartigen Übergang, zwischen den zueinander geneigten Abschnitten auf, wird das Muster möglicherweise schlagartig von einem Bereich (Erfassung des ersten Abschnitts der zumindest teilweise spiegelnden Oberfläche 12) zu einem anderen Bereich (Erfassung des gegenüber dem ersten Bereich geneigten zweiten Abschnitts) verschoben, so dass das Spiegelungsmuster zwischen den beiden Bereichen der Detektionsfläche 18₁ ausbleibt. Prinzipiell kann eine Veränderung des Spiegelungsmusters, beispielsweise wenn ein konstantes Muster an der Detektionsfläche 18₁ erwartet wird, oder eine Nicht-Veränderung des Musters, beispielsweise wenn eine Krümmung einer projizierten Linie des Spiegelungsmusters erwartet wird, Rückschlüsse auf einen Oberflächenfehler ermöglichen.

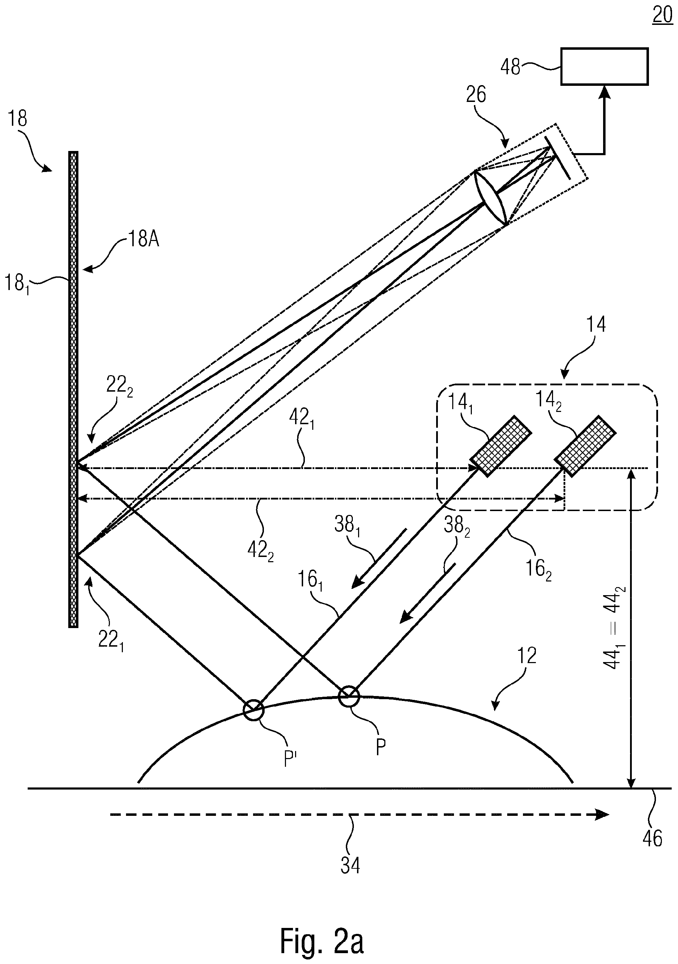

Fig. 2a zeigt eine schematische Seitenschnittansicht einer Vorrichtung 20 gemäß einem Ausführungsbeispiel, bei der die Beleuchtungseinrichtung 14 zwei Lichtquellen oder Beleuchtungsquellen 14₁ und 14₂ aufweist. Die Lichtquellen 14, und 14₂ können beispielsweise Laserlicht-Projektoren umfassen, um einen Lichtfächerstrahl auf die zumindest teilweise spiegelnde Oberfläche 12 zu richten. Die Lichtquellen 14₁ und 14₂ können so angeordnet sein, dass sie entsprechend der Beleuchtungsmuster 16₁ und 16₂ entlang einer jeweiligen Richtung 38₁ und 38₂ hin zu der zumindest teilweise spiegelnden Oberfläche aussenden. Die Lichtquellen 14₁ und 14₂ können dabei so angeordnet sein, dass die Richtungen 38₁ und 38₂ zumindest innerhalb eines Toleranzbereichs von zehn Grad, fünf Grad oder einem Grad oder weniger parallel zueinander verlaufen. Entlang der Bewegungsrichtung 34 können die Lichtquellen 14, und 14₂ versetzt zueinander angeordnet sein, so dass ein Abstand 42₁ zwischen der Lichtquelle 14₁ und der Detektionsflächenanordnung 18 und ein Abstand 42₂ zwischen der Lichtquelle 14₂ und der Detektionsflächenanordnung 18 voneinander verschieden ist. Dadurch sind auch die Richtungen 38₁ und 38₂ entlang der Bewegungsrichtung 34 versetzt zueinander angeordnet.

Dies ermöglicht den Erhalt unterschiedlicher Schenkellängen oder Weglängen von Strahlengängen zwischen den Lichtquellen 14₁ hin zu der zumindest teilweise spiegelnden Oberfläche 12 den zu der Detektionsflächenanordnung 18 und zwischen der Lichtquelle 14₂ über die zumindest teilweise spiegelnde Oberfläche 12 hin zu der Detektionsflächenanordnung 18 bezogen auf einen identischen Punkt P auf der zumindest teilweise spiegelnden Oberfläche 12.

Die Verwendung zweier Lichtquellen 14₁ und 14₂ ermöglicht es, die Spiegelungsmuster 22₁ und 22₂ gleichzeitig an der Detektionsflächenanordnung 18 zu erzeugen. Zu einem bestimmten Zeitpunkt wird das Spiegelungsmuster 22, durch Spiegelung in einem ersten Oberflächenbereich, etwa dem in dem dargestellten Querschnitt als Punkt beschriebenen Bereich P', und das Spiegelungsmuster 22₂ durch Spiegelung in einem hierzu disjunkten, d. h. räumlich getrennten Oberflächenbereich, der in dem dargestellten Querschnitt als Punkt P bezeichnet ist.

Wie es im Zusammenhang mit der Fig. 1 beschrieben ist, kann durch die relative Bewegung entlang der relativen Bewegungsrichtung 34 erreicht werden, dass in einem zeitlichen Abstand voneinander der Punkt P von der Lichtquelle 14₁ und von der Lichtquelle 14₂ beleuchtet wird, um das entsprechende Spiegelmuster 22₁ bzw. 22₂ an der Detektionsflächenanordnung 18 zu erhalten. Durch die unterschiedlichen Abstande 42₁ und 42₂ kann eine Spiegelung an unterschiedliche Orte und mit einer unterschiedlichen Vergrößerungsfunktion und/oder Ablenkwinkel an der Detektionsflächenanordnung 18 erhalten werden. Insbesondere können Abstände 44₁ und 44₂ zwischen der Lichtquelle 14₁ bzw. 14₂ bezüglich einer entlang einer Richtung senkrecht zu dem Abstand 42₁ und 42₂ angeordneten Bezugsebene 46 gleich sein. Die Bezugsebene kann beispielsweise parallel zu einer Einrichtung zum Tragen oder Halten oder Transportieren der zumindest teilweise spiegelnden Oberfläche 12 sein.

Ein derart erhaltener örtlicher Unterschied an der Detektionsflächenanordnung 18 zwischen den Spiegelungsmustern 22₁ und 22₂ kann von der Vorrichtung ausgewertet werden, etwa unter Verwendung einer Auswerteeinrichtung 48, die mit der Erfassungseinheit 26 gekoppelt ist und ausgebildet ist, um die von der Erfassungseinheit 26 empfangenen Bilder und/oder weiterverarbeiteten Daten zu empfangen. Die Auswerteeinrichtung 48 kann ausgebildet sein, um den Neigungswinkel der zumindest teilweise spiegelnden Oberfläche 12 für jeden erfassten Messpunkt zu bestimmen.

Der laterale Versatz der beiden Richtungen 38₁ und 38₂ führt zu einer unterschiedlichen Weglänge zwischen der Beleuchtungseinrichtung 14 über die zumindest teilweise spiegelnde Oberfläche 12 zu der Detektionsflächenanordnung 18, so dass das erste Spiegelungsmuster 22₁ und das zweite Spiegelungsmuster 22₂ mit einem örtlichen Unterschied an der Detektionsflächenanordnung 18 erzeugt werden, wobei sich der örtliche Unterschied auf eine Projektion oder Spiegelung der Beleuchtungssignale an demselben Punkt P bezieht. Die Vorrichtung ist ausgebildet, um den örtlichen Unterschied auszuwerten, um so die Auflösung der Positions-Winkel-Mehrdeutigkeit zu ermöglichen.

Bezüglich des Punktes P können so zu unterschiedlichen Zeiten unterschiedliche Informationen erhalten werden, was es erlaubt, die Positions-Winkel-Mehrdeutigkeit ganz oder teilweise aufzulösen.

In anderen Worten zeigt Fig. 2a eine schematische Darstellung des Messprinzips (Anordnung von Kamera, zu inspizierende Oberfläche, Detektionsebene und Beleuchtung/Laser)

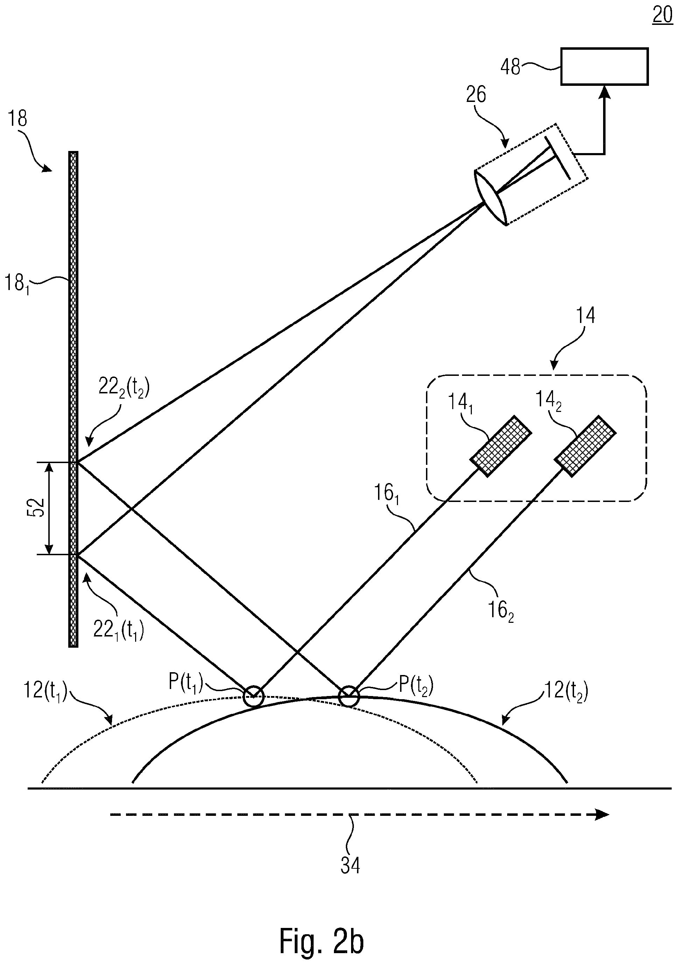

Zur weiteren Erläuterung ist in Fig. 2b eine weitere Seitenschnittansicht der Vorrichtung 20 aus Fig. 2a dargestellt. Gegenüber der Fig. 2a ist die Position der zumindest teilweise spiegelnden Oberfläche zu dem in Fig. 2a ebenfalls dargestellten Zeitpunkt t₂ und ferner zu einem beispielsweise vorangehenden Zeitpunkt t₁ dargestellt. Durch die Verschiebung der zumindest teilweise spiegelnden Oberfläche 12 entlang der relativen Bewegungsrichtung 34 ist der Punkt P aus Fig. 2a zu den Zeiten t₁ und t₂ an unterschiedlichen Stellen angeordnet.

Während des Zeitpunktes t₁ wird das Beleuchtungsmuster 16₁ auf den Punkt P projiziert, so dass das Spiegelungsmuster 22, an der Detektionsflächenanordnung 18 erhalten wird. Zum Zeitpunkt t₂ befindet sich der Punkt P an einem veränderten Ort, so dass das Beleuchtungssignal 16₂ auf den Punkt P trifft, so dass das Spiegelungsmuster 22₂ zum Zeitpunkt t₂ von dem Beleuchtungssignal 16₂ erhalten wird.

Durch Korrelation der entsprechenden Informationen aus den Spiegelungsmustern 22₁ und 22₂ sowie durch Auswertung eines örtlichen Unterschieds 52 zwischen den Spiegelungsmustern 22₁ und 22₂ unter Berücksichtigung der Geometrie der Messanordnung kann somit die Eigenschaft, d. h. Oberflächenneigung und/oder Position/Höhe, an der zumindest teilweise spiegelnden Oberfläche 12 eindeutig bestimmt werden.

Bevorzugt sind die Spiegelungsmuster 22₁ und 22₂ an der Detektionsflächenanordnung 18 von der Erfassungseinheit 26 und/oder der Auswerteeinrichtung 48 unterscheidbar. Dies ermöglicht die Aussendung der Beleuchtungssignale 16₁ und 16₂ gleichzeitig unter Ausführen der relativen Bewegung sowie eine entsprechende Korrelation der entsprechenden Teilbilder. Es ist jedoch ebenfalls möglich, die Beleuchtungssignale 16₁ und 16₂ sequenziell nacheinander auszusenden, beispielsweise unter erneuter Ausführung der relativen Bewegung, was eine einfache Ausgestaltung der Beleuchtungseinrichtung 14 ermöglicht, da es auf eine Unterscheidbarkeit der Spiegelungsmuster 22₁ und 22₂ an der Detektionsflächenanordnung 18 nicht mehr ankommt.

Eine Unterscheidung der Spiegelungsmuster 22₁ und 22₂ an der Detektionsflächenanordnung 18 kann durch unterschiedliche Mittel bereitgestellt werden. So kann beispielsweise bei einer in etwa bekannten oder erwarteten Form der zumindest teilweise spiegelnden Oberfläche 12 auch ein Bereich des Spiegelungsmusters 22₁ und 22₂ etwa bekannt oder erwartet werden. Dadurch kann durch eine örtliche Abgrenzung der beiden Spiegelungsmuster 22₁ und 22₂ auch eine Abgrenzung bei der Erkennung oder Identifikation erhalten werden. Dies kann jedoch die Freiheitsgrade bezüglich der zu untersuchenden Geometrien einschränken.

Während die Vorrichtungen 10 und 20 so beschrieben sind, dass die Spiegelungsmuster 22₁ und 22₂ gleichzeitig von der Detektionsfläche 18₁ erfasst werden und hierfür gleichzeitig entsprechende Beleuchtungsmuster ausgesendet werden, beziehen sich Ausführungsbeispiele auch darauf, dass das erste Spiegelungsmuster 22₁ und das zweite Spiegelungsmuster 22₂ während unterschiedlicher und voneinander disjunkter, das bedeutet, zeitlich nicht überlappend, Zeitintervalle erhalten werden. So kann beispielsweise ein erster Durchlauf unter Aussenden des Beleuchtungssignals 16₁ ausgeführt werden, um lediglich das Spiegelungsmuster 22, oder 22₂ zu erhalten. Anschließend kann ein erneuter Durchlauf ausgeführt werden, die zumindest teilweise spiegelnde Oberfläche 12 erneut entlang der relativen Bewegungsrichtung 34 bewegt werden und das jeweils andere Spiegelungsmuster 22₁ oder 22₂ erzeugt werden. Obwohl die hierdurch mögliche einfache Ausgestaltung mit einem entsprechenden zeitlichen Aufwand einhergeht, ist es problemlos möglich, die entsprechenden Aufnahmen oder Bilder in der Erfassungseinheit 26 oder der Auswerteeinrichtung 48 zu verknüpfen oder zu korrelieren.

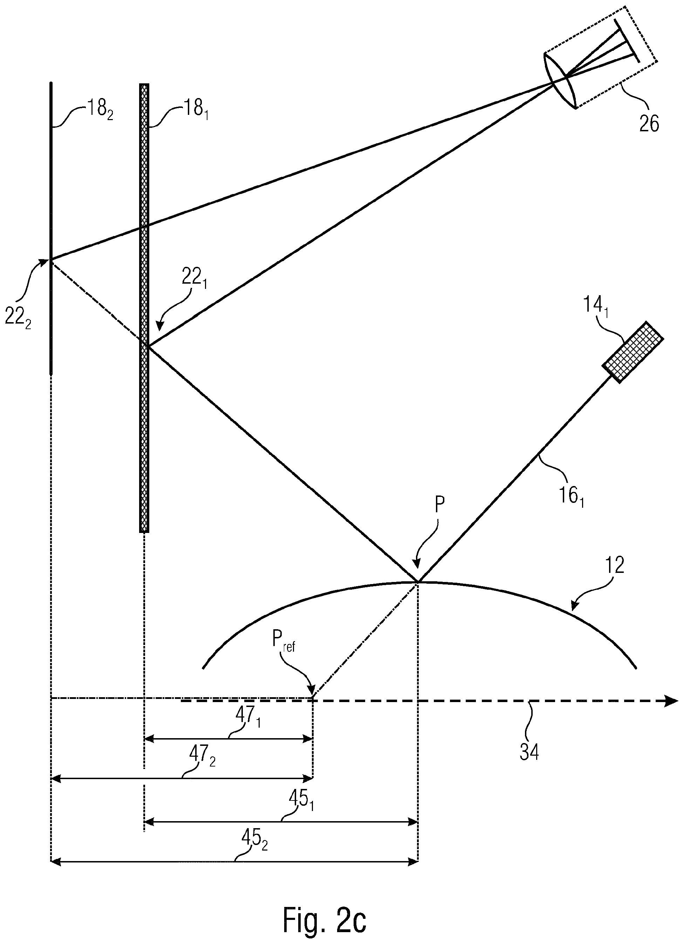

Fig. 2c zeigt eine schematische Seitenschnittansicht einer Vorrichtung 20' gemäß einem Ausführungsbeispiel, die ausgebildet ist, um aus einem Beleuchtungssignal bzw. einem einzelnen Beleuchtungsmuster zwei Spiegelungsmuster 22₁ und 22₂ zu erzeugen. Hierfür weist die Vorrichtung eine erste Detektionsfläche 18₁ auf, die in einem ersten Abstand 45₁ zu dem Oberflächenpunkt P der zumindest teilweise spiegelnden Oberfläche 12 des zu vermessenden Objekts angeordnet ist, etwa entlang der relativen translatorischen und/oder rotatorischen Bewegungsrichtung 34, d. h. entlang des Verfahrwegs. Eine zweite Detektionsfläche 18₂ ist mit einem zweiten bspw. größeren Abstand 45₂ zu dem Oberflächenpunkt P angeordnet ist. Hierdurch wird erreicht, dass das Beleuchtungsmuster 16 bzw. das Beleuchtungssignal 16₁ nach der Spiegelung an der zumindest teilweise spiegelnden Oberfläche 12 beide Spiegelungsmuster 22₁ und 22₂ erzeugen kann. Das bedeutet, anders als bei einem zeitlich versetzten Erzeugen, wie es beispielhaft anhand der Fig. 2b erläutert ist, können gleichzeitig aus einem ggf. einzelnen Beleuchtungsmuster 16₁ zumindest zwei Spiegelungssignale 22₁ und 22₂ erhalten werden. Während dies im Beispiel der Fig. 2a und Fig. 2b durch eine Beleuchtung des Oberflächenpunktes P mit Beleuchtungssignalen erfolgt, deren Quellen unterschiedliche Abstände zu der Detektionsfläche aufweisen, erfolgt ein ähnlicher oder äquivalenter Informationsgewinn durch die unterschiedlichen Abstände der Detektionsflächen 18₁ und 18₂ bezüglich des Oberflächenpunktes P.

Da die Position des Oberflächenpunktes in einem späteren Betrieb während einer Montage der Vorrichtung 20' möglicherweise ganz oder teilweise unbekannt ist, kann zum Einstellen der unterschiedlichen Abstände auch ein Referenzpunkt P_{ref} verwendet werden, an dem bspw. das Beleuchtungsmuster 16₁ projiziert wird, wenn die spiegelnde Oberfläche 12 nicht angeordnet ist, etwa eine Oberfläche einer Transporteinrichtung. Auch zu diesem Referenzpunkt P_{ref} können die Detektionsflächen 18₁ und 18₂ entlang der relativen Bewegungsrichtung 34 unterschiedliche Abstände 47₁ bzw. 47₂ aufweisen, um die zusätzlichen Informationen zu erhalten, denn die Spiegelung am geneigten Oberflächenpunkt P wirkt sich in den Spiegelungsmustern 22₁ und 22₂ unterschiedlich aus.

Zum Ermöglichen des Erhalts beider Spiegelungssignale 22₁ und 22₂ aus dem Beleuchtungsmuster 16, kann die zuerst von der Spiegelung getroffene Detektionsfläche 18₁ teilweise transparent oder halbtransparent ausgebildet sein, so dass die zweite Detektionsfläche 18₂ hinter der ersten Detektionsfläche angeordnet sein kann und anschließend von dem transmittierten Anteil der Spiegelung getroffen wird, was das Spiegelungsmuster 22₂ erzeugen kann. Durch die teilweise Transparenz kann eine gleichzeitige Erfassung der Spiegelungsmuster 22₁ und 22₂ mit der Erfassungseinrichtung 26 vorgenommen werden, wobei hier eine höchstmögliche Parallelität der gespiegelten Muster erhalten wird, was exakte Messungen ermöglicht.

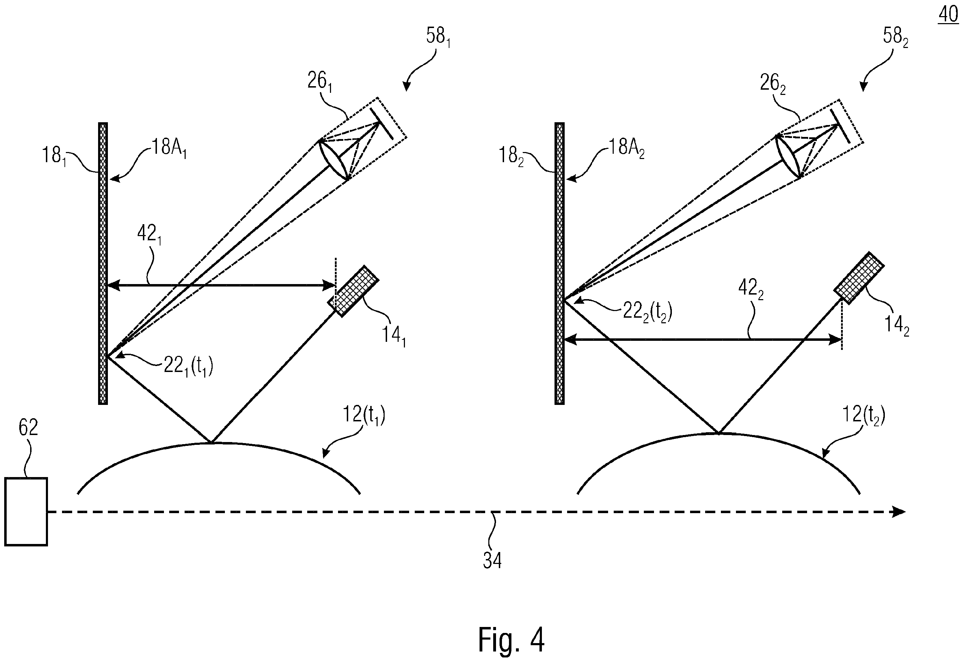

Alternativ ist es möglich, dass die Detektionsfläche 18₁ bspw. zumindest teilweise spiegelnd ist und einen gespiegelten Anteil des eintreffenden gespiegelten Beleuchtungsmusters an die zweite Detektionsfläche 18₂ spiegelt, die dann anders als in Fig. 2c dargestellt, bspw. gegenüberliegend der Detektionsfläche 18₁ angeordnet sein kann. Die Erfassungseinrichtung 26 kann dann einen entsprechend großen Sichtbereich haben, kann aber auch unter Verwendung mehrerer Erfassungseinrichtungen ausgeführt sein, wie es auch anhand von Fig. 4 beschrieben ist.

Zum Erhalt mehrerer Spiegelungsmuster können die Ausführungen der Fig. 2a, Fig. 2b, Fig. 2c mit einander kombiniert werden.

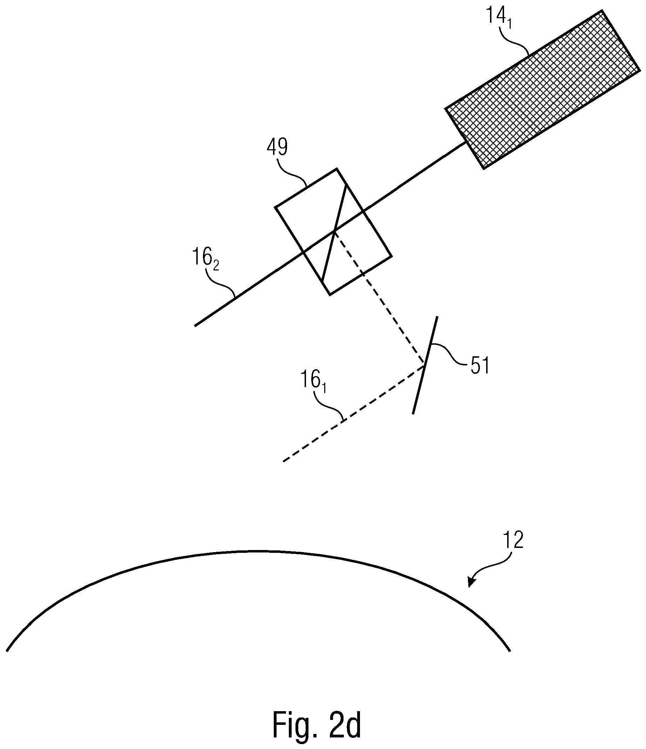

Fig. 2d zeigt eine schematische Seitenschnittansicht eines Teils einer Vorrichtung gemäß einem Ausführungsbeispiel, etwa der Vorrichtung 10. Zum Erzeugen der beiden Beleuchtungsmuster 16₁ und 16₂ kann, wie im Zusammenhang mit Fig. 1 bereits erläutert, eine einzelne Beleuchtungsquelle 14₁ verwendet werden, deren Ausgangssignal von einem Strahlteilerelement 49 geteilt wird, so dass ein ausgekoppelter Teil des Ausgangssignals nach erneuter Umlenkung durch ein spiegelndes Element 51 als Beleuchtungssignal 16₁ verwendet werden kann und ein nicht ausgekoppelter Teil des Ausgangssignals als Beleuchtungssignal 16₂ bereitsteht. Dadurch wird aus dem Ausgangssignal der Beleuchtungsquelle 14, ein erstes Beleuchtungssignal 16₁ und ein zweites Beleuchtungssignal 16₂ erzeugt. Der ausgekoppelte und/oder unausgekoppelte Anteil können auch abermals, ggf. wiederholt, geteilt werden, um zusätzliche Beleuchtungssignale zu erzeugen. Bevorzugt verlaufen die Beleuchtungssignale 16₁ und 16₂ parallel zueinander. Durch die Abstände und Wege zwischen Strahlteilerelement 49 und spiegelndem Element 51 kann ebenso ein lateraler Versatz der Beleuchtungssignale erzeugt werden, wie durch einen lateralen Versatz mehrerer Beleuchtungsquellen.

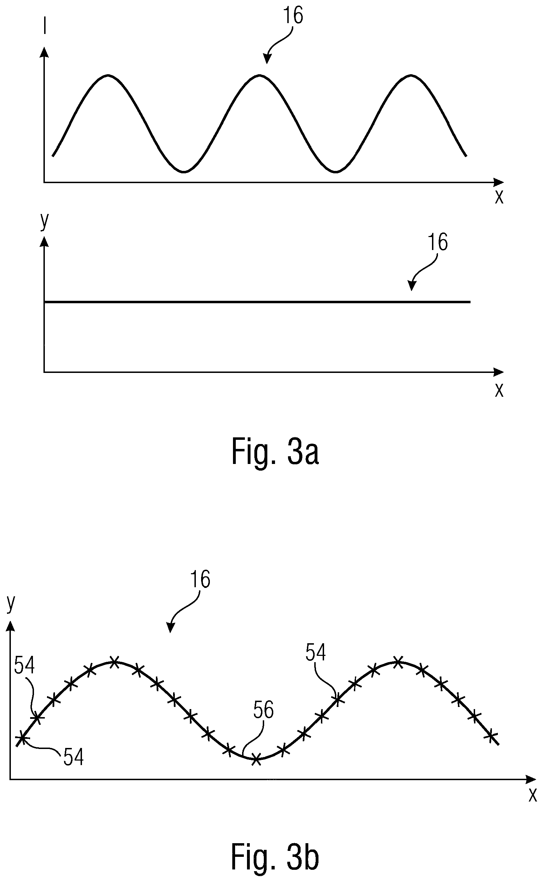

Fig. 3a zeigt schematische Diagramme eines Beleuchtungsmusters 16, das beispielsweise als Beleuchtungsmuster 16₁ und/oder 16₂ verwendet werden kann. Beispielsweise weist das Beleuchtungsmuster 16 eine Linienform auf, die sich in den Fig. 2a und 2b beispielsweise senkrecht zu einer Betrachtungsebene der jeweiligen Figur erstreckt und beispielsweise lediglich als Punkt darstellbar ist. Entlang eines Linienverlaufs, etwa entlang einer x-Richtung senkrecht zu einer y-Richtung, kann das Beleuchtungsmuster 16 einen veränderlichen Intensitätsverlauf innerhalb des Beleuchtungsmusters 16 aufweisen. Der Intensitätsverlauf kann eine Art von Codierung in das Beleuchtungsmuster 16 einbringen, so dass unterschiedliche Intensitätsverläufe zu voneinander unterscheidbaren Mustern auf der

Detektionsflächenanordnung 18 führen können. Beispielsweise kann der Intensitätsverlauf der Intensität I entlang der Richtung x sinusförmig sein, wobei dies unterschiedliche Phasenverschiebungen oder Variationen einer reinen Sinus-Funktion miteinschließt, etwa eine Kosinus-Funktion oder dergleichen. Alternativ oder zusätzlich können auch Abwandlungen hiervon implementiert werden, beispielsweise eine si-Funktion.

Fig. 3b zeigt einen schematischen Graphen eines weiteren Beleuchtungsmusters 16, das eine Vielzahl von Punkten 54 aufweist, die entlang einer Linie 56 angeordnet sind. Ein Verlauf der Linie 56 kann zwischen unterschiedlichen Beleuchtungsmustern unterschiedlich sein und dadurch eine Unterscheidbarkeit des Spiegelungsmusters 22₁ und 22₂ ermöglichen. Eine Vielzahl von Punkten kann mittels der Lichtquellen 14₁ und/oder 14₂ ausgesendet werden, beispielsweise unter Verwendung eines Licht-Gitters oder Beugungs-Gitters zum Aufteilen eines Laserlichts oder durch Einzelprojektion.

Die beliebige, gegebenenfalls innerhalb der verwendeten Beleuchtungsmuster eindeutige Geometrie der Linie sowie die Modulierung des Intensitätsverlaufs sind dabei beliebig miteinander kombinierbar.

Werden beispielsweise die Lichtquellen 14₁ und 14₂ verwendet, um die Beleuchtungsmuster 16₁ und 16₂ auszusenden, können sich die Beleuchtungsmuster durch zumindest eines aus einer Geometrie des Beleuchtungsmusters, einer Intensitätsverteilung innerhalb des Beleuchtungsmusters und einer Wellenlänge des Beleuchtungsmusters voneinander unterscheiden, wobei beliebige Kombinationen hiervon möglich sind.

So können die Beleuchtungsmuster 16₁ und 16₂ beispielsweise im Hinblick auf die verwendete Wellenlänge unterschiedlich sein. Die Wellenlängen können dabei so gewählt werden, dass ein Körper mit der zumindest teilweise spiegelnden Oberfläche für eine der beiden Wellenlängen zumindest teilweise transparent ist, das bedeutet zumindest 50 %, zumindest 60 %, zumindest 80 % oder mehr. Für die andere Wellenlänge kann der Körper überwiegend intransparent ausgebildet sein, das bedeutet mit einer Transparenz von höchstens 50 %, höchstens 40 % oder höchstens 30 % oder weniger. Dies ermöglicht, dass die Wellenlänge, für die der Körper zumindest teilweise transparent ist, auch oder überwiegend an einer Rückseite des Körpers gespiegelt oder reflektiert wird, so dass eine zusätzliche Information über die Rückseite des Prüfobjekts 12, an der Detektionsfläche 18 erhalten werden kann. Die Erfassungseinheit kann ausgebildet sein, um für beide Wellenlängen entsprechend der an der Detektionsfläche 18₁ dargestellten oder durch Fluoreszenz/Phosphoreszenz erhaltenen Wellenlänge empfindlich zu sein. Gemäß einem Ausführungsbeispiel ist es jedoch ebenfalls möglich, dass unterschiedliche Kameras angeordnet sind, die auf die jeweilige Wellenlänge unterschiedlicher Beleuchtungsmuster bzw. Spiegelungsmuster angepasst sind. Hierfür können beispielsweise frequenzselektive Filter bzw. Farbfilter verwendet werden.

Die Auswerteeinrichtung 48 kann ausgebildet sein, um die zumindest teilweise spiegelnde Oberfläche 12 durch Korrelation der Spiegelungsmuster 22₁ und 22₂ für den gemeinsamen Punkt P auszuwerten. Hierbei kann die Auswerteeinrichtung 48 eine zeitliche Verschiebung, einen Ort im Muster oder andere Parameter berücksichtigen, um eine Auswertungsgrundlage für die Bewertung der zumindest teilweise spiegelnden Oberfläche 12 zu schaffen, etwa einen Oberflächenverlauf, eine Topografie, lokale Unterschiede in der Reflektanz oder dergleichen. Unter anderem kann die Auswerteeinrichtung 48 einen örtlichen Unterschied zwischen den bezüglichen eines gleichen Punktes erhaltenen örtlichen Unterschied zwischen den Spiegelungsmustern 22₁ und 22₂ auswerten, beispielsweise den örtlichen Unterschied 52.

Alternativ oder zusätzlich kann die Auswerteeinrichtung 48 ausgebildet sein, um die Spiegelungsmuster 22₁ und 22₂ bezüglich einer Position in der Detektionsflächenanordnung 18, einer Helligkeit bzw. Intensität, einer Helligkeitsverteilung, einer Intensitätsverteilung miteinbegriffen und/oder einer Verformung auszuwerten. Die Auswerteeinrichtung 48 kann ausgebildet sein, um wiederholt Bilder von der Erfassungseinheit 26 zu erhalten, beispielsweise während die Relativbewegung entlang der relativen Bewegungsrichtung 34 ausgeführt wird. Positionen der Spiegelungsmuster 22₁ und/oder 22₂ können in den jeweiligen Bildern ausgewertet werden, etwas durch Korrelation miteinander. So kann ein erstes Bild bezüglich des Spiegelungsmusters 22₁ erfasst und ausgewertet werden und mit einem zweiten Bild korreliert werden, das bezüglich des Spiegelungsmusters 22₂ ausgewertet wird, wobei die Bilder so aufgenommen sind, dass die Spiegelung an einem übereinstimmenden Bereich oder Ort der zumindest teilweise spiegelnden Oberfläche 12 aufgenommen ist.

Fig. 4 zeigt eine schematische Seitenschnittansicht einer Vorrichtung 40 gemäß einem Ausführungsbeispiel, die eine gleiche oder vergleichbare Funktionalität aufweisen kann wie die Vorrichtung 20. Anders als bei der Vorrichtung 20 kann die Detektionsflächenanordnung jedoch zwei voneinander getrennte Detektionsflächen 18₁ und 18₂ aufweisen. Ferner kann die Vorrichtung 40 zwei separate Erfassungseinheiten 26₁ und 26₂ aufweisen, wobei jeweils eine Erfassungseinheit ausgelegt ist, um eine ihr zugeordnete Detektionsfläche 18₁ bzw. 18₂ zu erfassen. Die zumindest teilweise spiegelnde Oberfläche kann somit unter Verwendung zweier räumlich beabstandeter oder getrennter Erfassungseinrichtungen vermessen werden, wobei die zumindest teilweise spiegelnde Oberfläche mittels der translatorischen, alternativ oder zusätzlich rotatorischen Bewegung, zwischen den Messeinrichtungen mit jeweils der Beleuchtungsquelle 14₁ oder 14₂, der Detektionsfläche 18₁ bzw. 18₂ und der Erfassungseinrichtung 26₁ bzw. 26₂ bewegt wird. Auch hier kann die Spiegelung unterschiedlicher Muster bevorzugt an demselben Punkt oder Bereich auf der zumindest teilweise spiegelnden Oberfläche umgesetzt werden.

Bevorzugt sind die Abstände 42₁ und 42₂ zwischen den jeweiligen Lichtquellen 14₁ bzw. 14₂ und den zugeordneten Detektionsflächen 18₁ bzw. 18₂ verschieden, um den im Zusammenhang mit Fig. 2a beschriebenen zusätzlichen Informationsgewinn zu erhalten.

Dies ermöglicht, dass jeweils nur ein Spiegelungsmuster 22₁ oder 22₂ an einer Detektionsfläche 18₁ bzw. 18₂ projiziert wird, so dass auf eine Unterscheidung der Spiegelungsmuster 22₁ und 22₂ in einer Erfassungseinheit verzichtet werden kann. Die zumindest teilweise spiegelnde Oberfläche 12 kann zwischen einem ersten Messaufbau 58₁, umfassend die Lichtquelle 14₁, die Detektionsfläche 18₁ und die Erfassungseinheit 26, und einem zweiten Messaufbau 58₂, umfassend die Lichtquelle 14₂, die Detektionsfläche 18₂ und die Erfassungseinheit 26₂ unter Verschiebung entlang der Bewegungsrichtung 34 bewegt werden. Hierfür kann die Vorrichtung 40 die im Zusammenhang mit anderen Ausführungsbeispielen bereits erwähnte Positioniereinrichtung 62 aufweisen.

Bevorzugt sind die Lichtquellen 14, und 14₂ parallel ausgerichtet, um die erläuterte Mehrdeutigkeit auflösen zu können. Eine nicht-parallele Anordnung ist beispielsweise dann nützlich, wenn die Oberfläche nicht ausschließlich linear translatiert sondern bspw. zumindest teilweise gedreht oder rotiert wird, so dass die zweite Laser-Detektions-Einheit der Rotationsbewegung folgend ebenfalls gedreht zur ersten angeordnet wird.

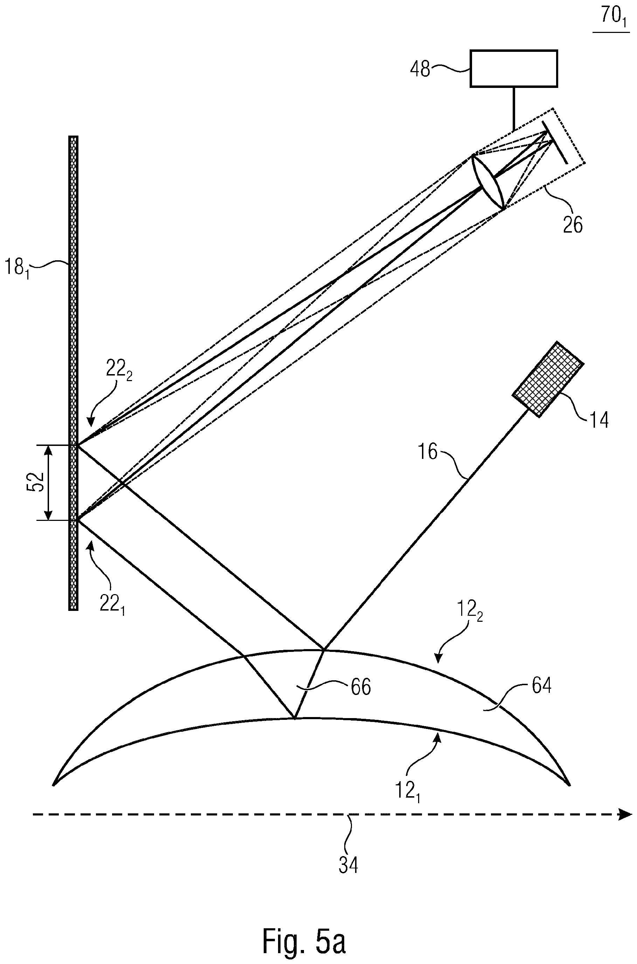

Fig. 5a zeigt eine schematische Seitenschnittansicht einer Vorrichtung 70₁ gemäß einem Ausführungsbeispiel. Bezug nehmend auf die Vorrichtung 10 ist die Beleuchtungseinrichtung 14 ausgebildet, um das Beleuchtungsmuster 16 in Richtung eines Objekts oder Körpers auszusenden, das die zumindest teilweise spiegelnde Oberfläche 12, aufweist. Diese kann der Beleuchtungseinrichtung 14 abgewandt angeordnet sein, so dass eine teilweise spiegelnde und teilweise transparente Oberfläche 12₂ des Körpers 64 der Beleuchtungseinrichtung 14 zugewandt ist. Ist die im Zusammenhang mit Vorrichtung 10 erläuterte zumindest teilweise spiegelnde Oberfläche 12 lediglich teilweise, d. h., unvollständig, spiegelnd, so kann auch die teilweise spiegelnde Oberfläche 12 aus Fig. 1 der Beleuchtungseinrichtung 14 zugewandt angeordnet sein. Der Körper 64 ist zumindest teilweise transparent, so dass ein nicht gespiegelter Anteil 66 des Beleuchtungsmusters 16 durch den Körper des Objekts 64 hindurchläuft und an der Oberfläche 12₁ ganz oder teilweise gespiegelt wird. Hierdurch ergeben sich an der Detektionsfläche 18₁ wiederum zwei Spiegelungsmuster 22₁ und 22₂, wobei jedes der Spiegelungsmuster 22₁ und 22₂ eine Oberflächenbewertung der jeweiligen Oberfläche 12₁ bzw. 12₂ zulässt und der örtliche Abstand 52 einen Aufschluss darüber zulässt, wie der Körper 64 zwischen den beiden Oberflächen 12₁ und 12₂ geformt ist. Eine derartige Ausgestaltung ist insbesondere für optische Komponenten vorteilhaft, beispielsweise Linsen oder Brillengläser. Das bedeutet, dass durch teilweise Spiegelung des Beleuchtungsmusters 16 an der teilweise spiegelnden Oberfläche 12₂ das Spiegelungsmuster 22₂ erzeugt wird. Durch zumindest teilweise Spiegelung eines Restanteils 66 des Beleuchtungsmusters 16 an der zumindest teilweise spiegelnden Oberfläche 12₁ wird das Spiegelungsmuster 22₁ erzeugt.

Die Auswerteeinrichtung 48 kann ausgebildet sein, um eine Oberflächenbeschaffenheit der Oberflächen 12₁ und/oder 12₂ auszuwerten. In dem vorliegenden Ausführungsbeispiel ist die Positions- Winkel-Mehrdeutigkeit noch nicht ausgeräumt. Allerdings ist es möglich, dass eine Soll-Form vorgegeben wird, mit der die Oberflächenbeschaffenheit in der Auswerteeinrichtung 48 verglichen wird. hierfür kann ein Vergleich des Spiegelungsmusters 22, mit einem entsprechenden Referenzmuster und ein Vergleich des Spiegelungsmusters 22₂ mit einem entsprechenden Referenzmuster ausgeführt werden.

Die Vorrichtung 70, kann mit einer weiteren Beleuchtungsquelle 14 kombiniert werden, so dass beispielsweise insgesamt drei oder gar vier Spiegelungsmuster an der Detektionsflächenanordnung erhalten werden, was es ermöglicht, auch beliebige zumindest teilweise transparente Körper zu vermessen. So könnte beispielsweise die Vorrichtung 70₁ einen oder beide der Messaufbauten 58₁ oder 58₂ implementieren. Andere Kombinationsmöglichkeiten sind ebenfalls möglich.

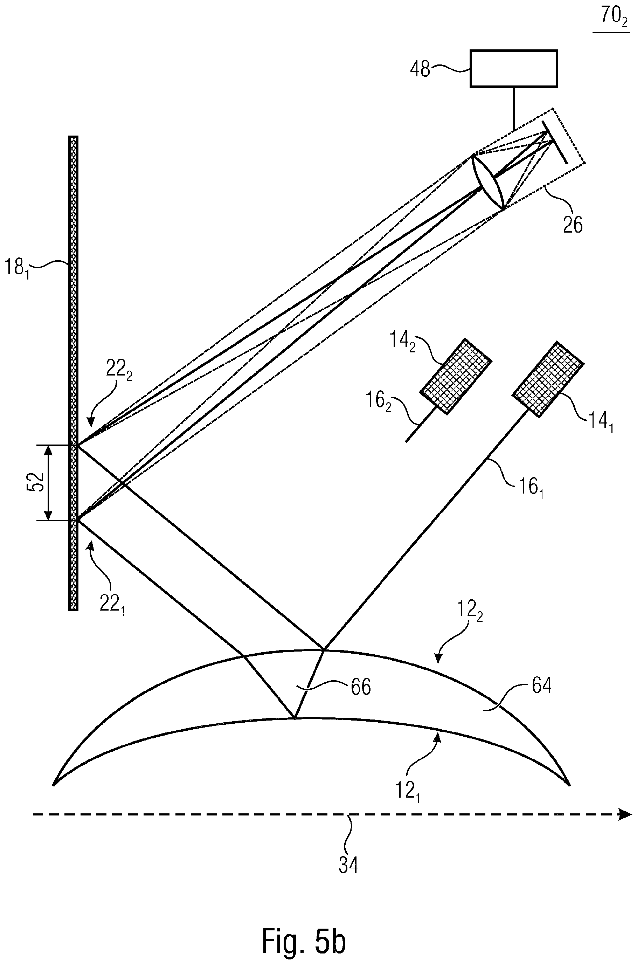

Fig. 5b zeigt eine schematische Seitenschnittansicht einer Vorrichtung 70₂ mit einer doppelt ausgeführten Beleuchtungseinrichtung, wie es beispielsweise für die Vorrichtung 20 beschrieben ist. Ein Strahlengang der Lichtquelle 14₂ ist nicht separat dargestellt, kann jedoch zum Erhalt zumindest eines weiteren Spiegelungsmusters an der Detektionsfläche 18₁ oder einer weiteren Detektionsfläche 18₂ führen, wie es für die anderen hierin beschriebenen Ausführungsbeispiele erläutert ist. Dadurch lässt sich die Mehrdeutigkeit bezüglich der Winkel-Position aufheben.

In anderen Worten zeigt Fig. 5b eine schematische Darstellung des Messprinzips zur Messung von Vorder- und Rückseite eines optischen Elements. Zur Vereinfachung ist der Strahlweg der zweiten Lichtquelle nicht eingezeichnet.

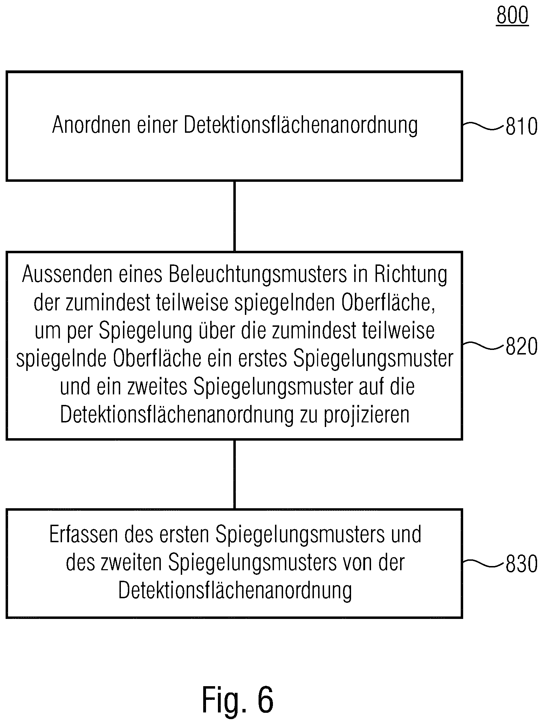

Fig. 6 zeigt ein schematisches Flussdiagramm eines Verfahrens 800 gemäß einem Ausführungsbeispiel. Ein Schritt 810 umfasst ein Anordnen einer Detektionsflächenanordnung. Ein Schritt 820 umfasst ein Aussenden eines Beleuchtungsmusters in Richtung der zumindest teilweise spiegelnden Oberfläche, um per Spiegelung über die zumindest teilweise spiegelnde Oberfläche ein erstes Spiegelungsmuster und ein zweites Spiegelungsmuster auf die Detektionsflächenanordnung zu projizieren. Ein Schritt 830 umfasst ein Erfassen des ersten Spiegelungsmusters und des zweiten Spiegelungsmusters von der Detektionsflächenanordnung.

Bevorzugt wird das Verfahren dergestalt ausgeführt, dass es unter Ausführung einer Translation ausgeführt wird. Das bedeutet ein Schritt des Verfahrens kann ein Ausführen einer translatorischen Bewegung umfassen, so dass eine Relativbewegung zwischen der Beleuchtungseinrichtung und der Detektionsflächenanordnung einerseits und der zumindest teilweise spiegelnden Oberfläche andererseits ausgeführt wird, wie es im Zusammenhang mit der Fig. 1 beschrieben ist. Das Verfahren kann so ausgeführt werden, dass die genaue Translationsdistanz bekannt ist, insbesondere im Hinblick auf den Weg, der zwischen den beiden zu verknüpfenden Spiegelungsmuster zurückgelegt wird, sowohl als Soll-Größe (ebene Fläche) als auch als Ist-Größe (angesteuerte Aktuatorik) und für die Berechnungen berücksichtigt wird. Gemäß Ausführungsbeispielen wird dies erhalten durch Verwenden einer translatorischen und/oder rotatorischen Bewegungseinheit, etwa der hierzu eingerichteten Positioniereinrichtung 62 sowie einer möglichst exakten Positionsbestimmung, die durch Verwendung eines Weglängenmesssystems erhalten werden kann.

In anderen Worten ist das technische Anwendungsgebiet der hierin beschriebenen Ausführungsbeispiele die berührungslose Formvermessung von hochglänzenden Objektoberflächen, speziell von technischen Gläsern wie beispielsweise Linsen und Brillengläsern. Eine mögliche Anwendung des Verfahrens ist die Formvermessung zur Qualitätsüberprüfung von Gleitsichtbrillengläsern bezüglich ihrer Formmaßhaltigkeit bzw. ihrer lokalen Brechkraft.

Themengebiete in diesem Zusammenhang sind die inverse Laser-Deflektometrie als schnelles, scannendes Aufnahmeverfahren von spiegelnden Oberflächen. Ferner kann die Methode zur Formvermessung von spiegelnden Oberflächen, Brillengläsern und Linsen genutzt werden. Ausführungsbeispiele ermöglichen eine gleichzeitige Erfassung von zwei Oberflächen im Gegensatz zu bisherigen Standardverfahren der phasenmessenden Deflektometrie. Ausführungsbeispiele ermöglichen eine absolute Geometriebestimmung mittels zweifacher inverser Deflektometrie gemäß dem Lösungsprinzip zwei Gleichungen mit zwei Unbekannten für jeden Objektpunkt. Es kann einer aber auch mehrere Lichtmusterprojektoren genutzt werden, z. B. zwei Laser-Musterprojektoren. Es können Lichtmusterprojektoren mit strukturierter Intensitätsverteilung genutzt werden, beispielsweise ein Punktemuster oder ein sinusförmiger Intensitätsverlauf, d. h. eine sinusförmige Modulation. Ausführungsbeispiele beziehen sich auf die Nutzung von parallel ausgerichteten Lichtmusterprojektoren, auf die Nutzung von Lichtmusterprojektoren mit mehreren Wellenlängen, auf die Nutzung mehrerer Detektionsflächen oder Kameras, gegebenenfalls mit entsprechenden Wellenlängen-Filtern, auf die Ausrichtung der parallel ausgerichteten Lichtmusterprojektoren an der mechanischen Translation-Bewegungseinheit, der Positioniereinrichtung 62, auf die Nutzung von zwei aufeinander justierten bzw. kalibrierten Messstationen bzw. Messaufbauten, gegebenenfalls in sequenzieller Folge sowie auf ein geeignetes Kalibrierverfahren des Systems.

Die beschriebenen Vorrichtungen und das Verfahren zur Formvermessung von zumindest teilweise spiegelnden Oberflächen kann dabei so ausgeführt werden, dass reflektierende oder teilreflektierende Oberflächen während einer Bewegung automatisch erfasst und vermessen werden. Dies ist möglich durch die Anwendung der erfindungsgemäßen Anordnung eines optischen Messaufbaus von einem oder zumindest zweier, vorzugsweise parallel ausgerichteter, strukturierter Beleuchtungseinrichtungen, einer oder mehrerer Erfassungseinheiten, etwa Flächenkameras, die ein Helligkeitsbild einer bzw. mehrerer Detektionsflächen aufnehmen, der zu erfassenden spiegelnden oder teilspiegelnden Oberfläche sowie einer möglicherweise rechnergestützten Auswerteeinrichtung.

Eine wesentliche Verbesserung gegenüber den bisherigen verfügbaren Verfahren ist, dass durch die Verwendung von zwei Beleuchtungssignalen, etwa durch Verwendung von zwei strukturierten Beleuchtungseinrichtungen, und durch die verwendete parallele Anordnung der Laser-Musterprojektoren (alternativ ortsgleiche Anordnung) eine eindeutige Lösung für Position und Winkel für jeden aufgenommenen Punkt der Oberfläche erzielt werden kann.

Somit ist es also möglich, die Objektoberflächengeometrie zu vermessen, wobei gleichzeitig der Neigungswinkel in jedem Messpunkt bestimmt werden kann.

Zudem ermöglicht das Verfahren die Vermessung von optischen Elementen ohne Schwärzung und Markierung der Rückseite. Ein Einsatz der hierin beschriebenen Ausführungsbeispiele in einer 100-%-Kontrolle, d. h. ohne prüfungsbedingten Ausschuss, wird somit ermöglicht. Darüber hinaus ermöglichen Ausführungsbeispiele die gleichzeitige Messung von Vorderseite und Rückseite eines Prüfobjektes.

Ausführungsbeispiele basieren auf einer entsprechenden Anordnung mindestens zweier Lichtquellen, vorzugsweise in Form zweier oder mehrerer Laserlicht-Projektoren, die als inspizierende Oberfläche 12 des Körpers einer oder mehrerer Detektionsflächen, einer oder mehrerer Messkameras sowie einer Bewegungseinheit.

Die vorzugsweise parallel ausgerichteten Laserlicht-Projektoren projizieren jeweils einen Lichtfächerstrahl ebenso vorzugsweise unter demselben Winkel auf die Oberfläche. Der Lichtfächerstrahl kann dabei strukturiert sein, um die spätere Zuordnung der lateralen Messpunkte zu erleichtern bzw. die Ablenkung des Lichtstrahls in der Lichtebene zu bestimmen. Eine mögliche Ausgestaltung wäre die Verwendung von Punkten, die sich auf einer gedachten Linie, etwa der Linie 56, befinden oder eines anderweitig, beispielsweise sinusförmig, modulierten Intensitätsverlaufs entlang der projizierten Linie. Das von der Oberfläche spekular reflektierte Licht wird von einer oder mehreren Detektionsflächen oder Detektionsflächen empfangen und dort beispielsweise diffus gestreut, so dass es von einer oder mehreren Messkameras über eine Abbildungsoptik auf den jeweiligen Kamera-Chip abgebildet werden kann.

Durch die Verwendung mindestens zweier Laserlicht-Projektoren kann dabei die Positions-Winkel-Mehrdeutigkeit des Deflektometrie-Verfahrens aufgelöst werden und die Oberflächenform im Rahmen der Messgenauigkeit direkt bestimmt werden. Die erfindungsgemäße Idee umfasst, dass die Länge des Strahlenwegs der beiden reflektierten Strahlen der beiden Laserlicht-Projektoren zwischen reflektierender Oberfläche und Detektionsfläche unterschiedlich ist. Durch die definierte Translation der zu erfassenden Oberfläche kann gewährleistet werden, dass derselbe Oberflächenpunkt von beiden Laserstrahlen zu unterschiedlichen Zeiten getroffen wird und aufgrund der Parallelität der Strahlen entsprechend des Oberflächenneigungswinkels in dieselbe Richtung reflektiert werden. Durch die unterschiedlichen Schenkellängen der reflektierten Strahlen treffen beide reflektierten Strahlen jedoch auf einer unterschiedlichen relativen Position auf der Detektionsfläche bzw. auf den Detektionsflächen auf und werden dort über die Messkameras erfasst. Dadurch ist es möglich, die beiden Werte für die Position und den Neigungswinkel jedes erfassten Oberflächenpunktes auf mathematischem Weg im Rahmen der Messgenauigkeit zu bestimmen. Die Messgenauigkeit kann von der Genauigkeit der System-Justage und der Kalibrierung, dem photonischen Rauschen des Kamerabildes der Schärfe bzw. Definiertheit der Laserlichtstrahlen sowie dem optischen Auflösungsvermögen der Kameras abhängen oder hiervon beeinflusst sein.

Um bei sehr komplex geformten Oberflächen eine Überschneidung der beiden reflektierten Strahlen auf einer gemeinsamen Detektionsfläche/Detektionsebene zu vermeiden, kann es günstig sein, die Anordnung der Komponente in einer der folgenden Beschreibungen zu variieren:
1. Zwei getrennte, aber relativ zueinander genau justierte Messaufbauten mit unterschiedlichem Abstand von Laser (Lichtquelle) und Detektionsebene: dabei wird die zu vermessende Probe beispielsweise durch eine Linearbewegung sequenziell von beiden Messaufbauten erfasst. Durch eine entsprechende Justage der beiden Messaufbauten zueinander kann, wie auch bei der Verwendung nur einer gemeinsamen Detektionsebene und Kamera, eine eindeutige Zuordnung von Messdaten für die jeweilige Oberfläche erreicht werden. Derartige Ausführungsbeispiele sind beispielsweise in den Fig. 4 beschrieben.
2. Zwei zeitlich getrennte Aufnahmen, bei denen jeweils nur ein Laserlicht-Projektor ausgeschaltet ist, können zu einer gleichen Informationsgrundlage führen. Dies ist ebenfalls in den Fig. 4 implementierbar. Andere Ausführungsbeispiele können durch erneuten Durchlauf des Objektkörpers derart ausgeführt werden.
3. Verwendung von zwei unterschiedlichen Wellenlängen für die Laserlichtquellen und zwei Kameras mit darauf abgestimmten Farbfiltern.

Um bei transparenten Objekten eine Trennung der von Vorder- und Rückseite des Objekts reflektierten Strahlen zu erreichen, kann es günstig sein, die Messung nach den oben genannten Prinzipien mit Strahlung verschiedener Wellenlänge durchzuführen. Dabei kann es entsprechend günstig sein, jeweils unterschiedliche, aufeinander justierte Messaufbauten zu verwenden. Denkbar ist beispielsweise, die Vermessung der Vorderseite mit einer Wellenlänge durchzuführen, für die das Material nicht transparent ist. Für die Vermessung der Rückseite kann ein Aufbau mit identischer Geometrie aber mit einer Wellenlänge verwendet werden, für die das Material transparent ist. Aus dem Vergleich beider Messungen kann zwischen Vorder- und Rückseite unterschieden werden.

Die Position der reflektierten und von der Detektionsebene diffus gestreuten Laserlichtstrahlen kann in dem Kamerabild automatisch bestimmt werden. Durch eine sukzessive und sequenzielle Folge einer Vielzahl solcher Aufnahmen während einer Relativbewegung mittels Bewegungseinheit zwischen der zu vermessenden Oberfläche und den messtechnischen Komponenten (Lichtquellen, Detektionsebene(n) und Kamera(s)) kann mittels der Auswerteeinrichtung 48, gegebenenfalls unter Verwendung eines Computer-Programms, die Information eines Oberflächengebiets bzw. der gesamten zu inspizierenden Oberfläche gesammelt und zusammengesetzt und bezüglich der Bestimmung der Oberflächenform ausgewertet werden.

Für die Beleuchtungsmuster kann prinzipiell ein beliebiger Wellenlängenbereich eingesetzt werden. Beispielsweise ist die Verwendung besonders kurzwelliger (UV oder XUV) oder langwelliger Strahlung (Infrarot). Das Infrarot-, UV- oder XUV-Licht kann auf der Detektionsebene beispielsweise durch phosphoreszierende Stoff in sichtbares Licht umgewandelt werden, um von konventionellen Silizium-basierten Kamera-Sensoren erfasst zu werden. Weiterhin ist es möglich, für den gleichen Prüfvorgang unterschiedliche Wellenlängen einzusetzen, um beispielsweise verschiedene Oberflächen-Tiefenbereiche oder unterschiedliche Prüfbereiche zu erfassen. Für die laterale Detailauflösung der Messung kann es vorteilhaft sein, einen möglichst hoch fokussierten Laserlicht-Projektor einzusetzen. Bei starker Variation des Oberflächenhöhenverlaufs kann es vorteilhaft sein, einen Laserlicht-Projektor mit einer besonders großen Rayleighlänge einzusetzen, d. h. einem besonders großen Schärfentiefenbereich des Lasers. In besonderen Fällen kann es günstig sein, eine automatische motorisch gesteuerte Fokussierung des Lasers einzusetzen, um einen möglichst großen Objektbereich mit einer möglichst guten Laserfokussierung zu erfassen.

Die Detektionsebene(n) kann (können) beispielsweise diffus streuende nicht-transparente oder halb transparente Streufolie(n) sein, die von einer oder mehreren Flächenkameras von vorne und/oder von hinten über eine konventionelle Abbildungsoptik erfasst wird (werden), oder auch die Detektorfläche einer (mehrerer) elektronischer Flächenkamera(s). Die Detektionsebene(n) kann (können) optisch beispielsweise über einen oder mehrere sogenannte Glasfaser-Taper an eine oder mehrere Flächenkamera(s) ohne Verwendung zusätzlicher Abbildungs-Optiken gekoppelt sein. Weiterhin kann die zumindest eine Detektionsebene die aktive Fläche eines oder mehrerer Kamera-Chips oder eines oder mehrerer großer TFT-Flächen oder Paneele sein (TFT = thin-film transistor; Dünnfilmtransistor), etwa ein TFT-Flachpaneel-Detektor. Die zumindest eine Detektionsebene kann mit phosphoreszierendem Material beschichtet sein, so dass höher- oder niederenergetische Strahlung in sichtbares Licht umgewandelt werden kann.

Die auftreffenden, durch die zu erfassende Oberfläche reflektierte und durch die Oberfläche verformten strukturierten Fächerstrahlen, die sich auf der Detektionsebene(n) als mehr oder weniger verformt und strukturierte Lichtlinien ausprägen, können durch die zumindest eine elektronische Kamera erfasst und bezüglich der Position auf dem Kamera-Chip ausgewertet werden. Die Auswertung kann dabei auch schon in der zumindest einen Kamera selbst erfolgen. Die Trennung der durch die zumindest einen verwendeten Laserlicht-Projektoren hervorgerufenen Bilder kann geometrisch oder durch Verwendung unterschiedlicher Wellenlängen erfolgen. Zudem kann eine zeitversetzte Messung durchgeführt werden, bei der zu jedem Zeitpunkt jeweils nur ein Laserlicht-Projektor aktiviert ist. Das bedeutet, die Beleuchtungseinrichtung kann ausgebildet sein, um das Beleuchtungsmuster unter Verwendung eines ersten Wellenlängenbereichs auszusenden. Die Detektionsflächenanordnung kann ausgebildet sein, um den ersten Wellenlängenbereich in einen zweiten Wellenlängenbereich zu überführen, so dass das erste Spiegelungsmuster und/oder das zweite Spiegelungsmuster in dem zweiten Wellenlängenbereich von der Erfassungseinheit erfassbar sind.

Neben der Positionsbestimmung der resultierenden Strukturen kann auch die Helligkeit oder eine etwaige Verformung der resultierenden Strukturen auf der oder den Detektionsebene(n) ausgewertet werden. Die Erfassungseinheit 26 kann sogenannte 3D-Messkameras oder Lichtschnitt-Kameras umfassen, die Messraten von einigen zehntausend Profilmessungen pro Sekunde ermöglichen. Gemäß bevorzugten Ausführungsbeispielen wird das zu vermessende Brillenglas linear bewegt, während die zumindest eine Lichtquelle, die zumindest eine Kamera und die zumindest eine Detektionsebene in Ruhe bleiben. Ohne Einschränkung der Allgemeinheit kann auch das Objekt in Ruhe bleiben und die messtechnischen Komponenten relativ dazu bewegt werden oder eine Kombination hiervon ausgeführt werden. Im bevorzugten Anwendungsbeispiel der Brillenglasvermessung wird das Licht im Allgemeinen nicht nur an der Oberfläche reflektiert, sondern auch an der Unterseite, d. h. an der Rückseite des Brillenglases. Dies ermöglicht es, gleichzeitig die Vorderseite und die Rückseite zu erfassen, wie es im Zusammenhang mit der Fig. 5a beschrieben ist.

Ausführungsbeispiele beziehen sich neben Vorrichtungen auch auf Vermessungssysteme. Entsprechende Vermessungssysteme können ausgebildet sein, um ein Vermessungsobjekt mit einer zu erfassenden Oberfläche zu vermessen, etwa der zumindest teilweise spiegelnden Oberfläche 12.

Ausführungsbeispiele beziehen sich auf Vorrichtungen, Verfahren und Vermessungssysteme zur Vermessung von zumindest teilweise spekular reflektierenden Oberflächen. Merkmale hiervon können umfassen:
- unter Verwendung eines, zweier oder mehrerer Lichtquellen zur Erzeugung definierter Muster, etwa paralleler Strahlen, einzeln oder als Lichtvorhang oder alternativ fächerstrahlartiger Strahlen, bspw. parallel angeordneter, strukturierter Lichtquellen, einer (mehrerer) Detektionsebene(n), die mit jeweils einer Messkamera gekoppelt ist (sind), und einer geeigneten Anordnung dieser messtechnischen Komponenten relativ zur zu erfassenden Oberfläche; und / oder
- Verwendung einer, zweier oder mehrerer Laser-Projektoren mit strukturierten Intensitätsverteilung entlang des Lichtstrahls, Lichtvorhangs oder Fächerstrahls (z.B. Punkte auf Linie oder sinusförmig modulierter Linie) als Lichtquelle; und/oder
- Verschiebung der Sinusphase der Lichtquelle, um eine genauere laterale Positionsbestimmung zu erreichen, hierzu kann auch die Translationsbewegung Schritt für Schritt ablaufen; und/oder
- Verwendung eines einzelnen Laser-Projektors mit strukturierter Intensitätsverteilung entlang des Fächerstrahls (z. B. Punkte auf Linie oder sinusförmig modulierter Linie) als Lichtquelle für die Vermessung einer spiegelnden Oberfläche. In diesem Fall ist die Positions-Winkel-Mehrdeutigkeit nicht behoben. Durch die Strukturierung können jedoch benachbarte Strahlen unterschieden werden, so dass ausgehend von einer bekannten Soll-Form die Oberfläche approximativ rekonstruiert werden kann; und/oder
- komplette Abtastung der Oberfläche durch Relativbewegung zwischen Messanordnung und Oberfläche während der sequenziellen Lichtprofil-Messung unter Verwendung der möglichst exakten Kenntnis der Verschiebung; und/oder
- komplette Abtastung durch rotatorische Drehbewegung unter Verwendung der möglichst exakten Kenntnis der Verschiebung, etwa durch Winkelbestimmung, zur Abtastung von im wesentlichen radialsymmetrischen Oberflächen; und/oder
- Gleichzeitige Verwendung verschiedener Messanordnungen nach dem erfindungsgemäßen Prinzip zur gleichzeitigen Erfassung unterschiedlicher Oberflächenbereiche in einer gemeinsamen Relativbewegung; und/oder
- Gleichzeitige Erfassung der von der Vorder- und der Rückseite reflektierten Lichtstrahlen eines transparenten Messobjekts; und/oder
- Auswertung der erzeugten Rohdaten auf einem separaten Mess- und Auswerte-Rechner mittels Computer-Programm; und/oder
- Aufnahme der Detektionsebene(n) von der Rückseite aus, d. h. beispielsweise durch halbtransparente diffus streuende Folie(n) hindurch; und/oder
- Verwendung von Kameras mit integrierter Bildauswertung, etwa 3D-Kameras (Lichtschnittkameras) als Messkameras zur schnellen Auswertung der Position der resultierenden Strukturen auf der (den) Detektionsebene(n); und/oder
- Ausprägung der Detektionsebene(n) als Eingangsfläche eines (mehrerer) Glasfaser-Tapers, an dessen (deren) Ausgangsfläche ein (mehrerer) elektronischer Kamera-Chip gekoppelt ist; und/oder
- Verwendung eines (mehrerer) TFT-Flat-Panel-Detektors(en) als Detektionsebene(n); und/oder
- Verwendung von Lichtstrahlung mit besonders kurzer oder langer Wellenlänge (Infrarot, UV, XUV); und/oder
- Verwendung eines phosphoreszierenden Materials auf der Detektionsebene(n), um eine kurz- oder langwellige Strahlung in sichtbares Licht oder langwellige Strahlung umzuwandeln; und/oder
- Verwendung von motorischer Laser-Fokussiereinrichtung für die Erhöhung des Tiefenschärfebereichs der Laser-Projektoren auf der Oberfläche.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10; 30; 40; 70₁; 70₂) zur Erfassung von zumindest teilweise spiegelnden Oberflächen (12) mit folgenden Merkmalen:
einer Detektionsflächenanordnung (18);
einer Beleuchtungseinrichtung (14), die ausgebildet ist, um ein Beleuchtungsmuster (16) in Richtung der zumindest teilweise spiegelnden Oberfläche (12) auszusenden, um per Spiegelung über die zumindest teilweise spiegelnde Oberfläche (12) ein erstes Spiegelungsmuster (22₁) und ein zweites Spiegelungsmuster (22₂) auf die Detektionsflächenanordnung (18) zu projizieren; und
einer Erfassungseinheit (26), die ausgebildet ist, um das erste Spiegelungsmuster (22₁) und das zweite Spiegelungsmuster (22₂) von der Detektionsflächenanordnung (18) zu erfassen;
wobei die Vorrichtung ausgebildet ist, um das erste Spiegelungsmuster (22₁) während eines ersten Zeitintervalls und das zweite Spiegelungsmuster (22₂) während eines zweiten Zeitintervalls an der Detektionsflächenanordnung (18) zu erzeugen, wobei das erste Zeitintervall und das zweite Zeitintervall zeitlich disjunkt sind;
wobei die Vorrichtung ausgebildet ist, um einen Oberflächenpunkt (P) der zumindest teilweise spiegelnden Oberfläche (12) eines zu vermessenden Objekts zu einem ersten Zeitpunkt (t₁) mit einem ersten Beleuchtungsmuster (16₁) zu beleuchten, um das erste Spiegelungsmuster(22₁) zu erhalten; und um den Oberflächenpunkt (P) zu einem zweiten, von dem ersten Zeitpunkt verschiedenen Zeitpunkt (t₂) mit einem zweiten Beleuchtungsmuster (16₂) zu beleuchten, um das zweite Spiegelungsmuster (22₂) zu erhalten; wobei das erste Spiegelungsmuster (22₁) unter Verwendung einer ersten Relativposition zwischen einer ersten Beleuchtungsquelle (14₁) zum Erzeugen des ersten Spiegelungsmusters (22₁) einerseits und der Detektionsflächenanordnung (18) andererseits und bei der das zweite Spiegelungsmuster (22₂) unter Verwendung einer zweiten Relativposition zwischen einer zweiten Beleuchtungsquelle (14₂) zum Erzeugen des zweiten Spiegelungsmusters (22₂) einerseits und der Detektionsflächenanordnung (18) andererseits erhalten wird.

2. Vorrichtung gemäß Anspruch 1, wobei die Detektionsflächenanordnung eine erste Detektionsfläche aufweist, die in einem ersten Abstand zu einen Oberflächenpunkt (P) der zumindest teilweise spiegelnden Oberfläche (12) eines zu vermessenden Objekts angeordnet ist, und eine zweite Detektionsfläche (18₂) aufweist, die in einem zweiten Abstand zu dem Oberflächenpunkt (P) angeordnet ist, so dass das Beleuchtungsmuster (16) nach der Spiegelung an der zumindest teilweise spiegelnden Oberfläche (12) bei einem Auftreffen an der ersten Detektionsfläche (18₁) das erste Spiegelungsmuster (22₁) erzeugt und bei einem nachfolgenden Auftreffen an der zweiten Detektionsfläche (18₂) das zweite Spiegelungsmuster (22₂) erzeugt.

3. Vorrichtung gemäß Anspruch 1, die eingerichtet ist, dass das erste Spiegelungsmuster (22₁) und das zweite Spiegelungsmuster (22₂) an einer gemeinsamen Detektionsfläche (18₁) der Detektionsflächenanordnung (18) erzeugt werden.

4. Vorrichtung gemäß einem der vorangehenden Ansprüche, bei der das Beleuchtungsmuster ein Linienmuster umfasst, wobei ein Intensitätsverlauf (I) des Linienmusters entlang eines Verlaufs (X) der Linie veränderlich ist.

5. Vorrichtung gemäß einem der vorangehenden Ansprüche, ferner umfassend eine Auswerteeinrichtung (48), die ausgebildet ist, um die zumindest teilweise spiegelnde Oberfläche (12) durch Korrelation des ersten Spiegelungsmusters (22₁) und des zweiten Spiegelungsmusters (22₂) für einen gemeinsamen Punkt (P) der zumindest teilweise spiegelnden Oberfläche (12) auszuwerten.

6. Vorrichtung gemäß einem der vorangehenden Ansprüche, bei der die Beleuchtungseinrichtung (14) ausgebildet ist, um das Beleuchtungsmuster (16) unter Verwendung eines ersten Wellenlängenbereichs auszusenden; wobei die Detektionsflächenanordnung (18) ausgebildet ist, um den ersten Wellenlängenbereich in einen zweiten Wellenlängenbereich zu überführen, so dass das erste Spiegelungsmuster (22₁) und/oder das zweite Spiegelungsmuster (22₂) in dem zweiten Wellenlängenbereich von der Erfassungseinheit (26) erfassbar ist..

7. Vorrichtung gemäß einem der vorangehenden Ansprüche, bei der die Detektionsflächenanordnung (18) eine aktive Fläche eines Bildsensors (32) ist und bei der zwischen der zumindest teilweise spiegelnden Oberfläche (12) und dem Bildsensor (32) keine abbildende Optik angeordnet ist.

8. Vorrichtung (10; 30; 40; 70₁; 70₂) zur Erfassung von zumindest teilweise spiegelnden Oberflächen (12) mit folgenden Merkmalen:
einer Detektionsflächenanordnung (18);
einer Beleuchtungseinrichtung (14), die ausgebildet ist, um ein Beleuchtungsmuster (16) in Richtung der zumindest teilweise spiegelnden Oberfläche (12) auszusenden, um per Spiegelung über die zumindest teilweise spiegelnde Oberfläche (12) ein erstes Spiegelungsmuster (22₁) und ein zweites Spiegelungsmuster (22₂) auf die Detektionsflächenanordnung (18) zu projizieren; und
einer Erfassungseinheit (26), die ausgebildet ist, um das erste Spiegelungsmuster (22₁) und das zweite Spiegelungsmuster (22₂) von der Detektionsflächenanordnung (18) zu erfassen;
wobei die Erfassungseinheit (26) ausgebildet ist, um eine Detektionsfläche (18₁) der Detektionsflächenanordnung (18) von einer Seite zu erfassen, die einer Seite, von der das zweite Spiegelungsmuster an die Detektionsfläche gespiegelt wird, gegenüberliegend angeordnet ist.

9. Vorrichtung (10; 30; 40; 70₁; 70₂) zur Erfassung von zumindest teilweise spiegelnden Oberflächen (12) mit folgenden Merkmalen:
einer Detektionsflächenanordnung (18);
einer Beleuchtungseinrichtung (14), die ausgebildet ist, um ein Beleuchtungsmuster (16) in Richtung der zumindest teilweise spiegelnden Oberfläche (12) auszusenden, um per Spiegelung über die zumindest teilweise spiegelnde Oberfläche (12) ein erstes Spiegelungsmuster (22₁) und ein zweites Spiegelungsmuster (22₂) auf die Detektionsflächenanordnung (18) zu projizieren; und
einer Erfassungseinheit (26), die ausgebildet ist, um das erste Spiegelungsmuster (22₁) und das zweite Spiegelungsmuster (22₂) von der Detektionsflächenanordnung (18) zu erfassen;
wobei die Vorrichtung eingerichtet ist, dass das erste Spiegelungsmuster (22₁) an einer ersten Detektionsfläche (18₁) der Detektionsflächenanordnung (18) und das zweite Spiegelungsmuster (22₂) an einer zweiten Detektionsfläche (18₂) der Detektionsflächenanordnung (18) erzeugt werden, wobei die erste Detektionsfläche (18₁) und die zweite Detektionsfläche entlang einer relativen Bewegungsrichtung (34) zwischen der Beleuchtungseinrichtung (14) und der Detektionsflächenanordnung (18) einerseits und der zumindest teilweise spiegelnden Oberfläche (12) andererseits versetzt zu einander angeordnet sind;
wobei ein erster Abstand (42₁) zwischen der ersten Detektionsfläche (18₁) und einer ersten Beleuchtungsquelle (14₁) zum Aussenden eines ersten Beleuchtungsmusters (16₁) zum Erhalten des ersten Spiegelungsmusters (22₁) entlang der relativen Bewegungsrichtung (34) von einem zweiten Abstand (42₂) zwischen der zweiten Detektionsfläche (18₂) und einer zweiten Beleuchtungsquelle (14₂) zum Aussenden eines zweiten Beleuchtungsmusters (16₂) zum Erhalten des zweiten Spiegelungsmusters (22₂) entlang der relativen Beleuchtungsrichtung (34) voneinander verschieden ist;
wobei die erste Beleuchtungsquelle (14₁) und die zweite Beleuchtungsquelle (14₂) ausgebildet sind, um das erste Beleuchtungsmuster (16₁) und das zweite Beleuchtungsmuster (16₂) entlang zueinander paralleler Richtungen (38₁, 38₂) auszusenden; und
wobei eine Hauptseite (18A₂) der zweiten Detektionsfläche (18₂), von der das zweite Spiegelungsmuster (22₂) empfangen wird, einer Hauptseite (18A₁) der ersten Detektionsfläche (18₁), von der das erste Spiegelungsmuster (22₁) empfangen wird, abgewandt ist.

10. Vorrichtung (10; 30; 40; 70₁; 70₂) zur Erfassung von zumindest teilweise spiegelnden Oberflächen (12) mit folgenden Merkmalen:
einer Detektionsflächenanordnung (18);
einer Beleuchtungseinrichtung (14), die ausgebildet ist, um ein Beleuchtungsmuster (16) in Richtung der zumindest teilweise spiegelnden Oberfläche (12) auszusenden, um per Spiegelung über die zumindest teilweise spiegelnde Oberfläche (12) ein erstes Spiegelungsmuster (22₁) und ein zweites Spiegelungsmuster (22₂) auf die Detektionsflächenanordnung (18) zu projizieren; und
einer Erfassungseinheit (26), die ausgebildet ist, um das erste Spiegelungsmuster (22₁) und das zweite Spiegelungsmuster (22₂) von der Detektionsflächenanordnung (18) zu erfassen;
wobei sich ein erstes Beleuchtungsmuster (16₁) von einem zweiten Beleuchtungsmuster (16₂) durch eine Wellenlänge unterscheidet, wobei die Wellenlänge des ersten Beleuchtungsmusters (16₁) so gewählt ist, dass ein die zumindest teilweise spiegelnde Oberfläche (12) aufweisender Körper (64) überwiegend hierfür transparent ist, und wobei die Wellenlänge des zweiten Beleuchtungsmusters (16₂) so gewählt ist, dass der die zumindest teilweise spiegelnde Oberfläche (12) aufweisende Körper (64) überwiegend intransparent ist.

11. Vermessungssystem mit zumindest einer Vorrichtung zur Erfassung von zumindest teilweise spiegelnden Oberflächen (12) gemäß einem der Ansprüche 1-10, das ausgebildet ist, um ein Vermessungsobjekt (64) mit einer zu erfassenden Oberfläche zu vermessen.

12. Verfahren (800) zur Erfassung von zumindest teilweise spiegelnden Oberflächen mit folgenden Merkmalen:
Anordnen (810) einer Detektionsflächenanordnung;
Aussenden (820) eines Beleuchtungsmusters in Richtung der zumindest teilweise spiegelnden Oberfläche, um per Spiegelung über die zumindest teilweise spiegelnde Oberfläche ein erstes Spiegelungsmuster und ein zweites Spiegelungsmuster auf die Detektionsflächenanordnung zu projizieren; und
Erfassen (830) des ersten Spiegelungsmusters und des zweiten Spiegelungsmusters von der Detektionsflächenanordnung;
so dass das erste Spiegelungsmuster (22₁) während eines ersten Zeitintervalls und das zweite Spiegelungsmuster (22₂) während eines zweiten Zeitintervalls an der Detektionsflächenanordnung (18) erzeugt wird, so dass das erste Zeitintervall und das zweite Zeitintervall zeitlich disjunkt sind; wobei das Verfahren ferner aufweist:
Beleuchten eines Oberflächenpunkt (P) der zumindest teilweise spiegelnden Oberfläche (12) eines zu vermessenden Objekts zu einem ersten Zeitpunkt (t₁) mit einem ersten Beleuchtungsmuster (16₁), um das erste Spiegelungsmuster(22₁) zu erhalten; und
Beleuchten des Oberflächenpunkts (P) zu einem zweiten, von dem ersten Zeitpunkt verschiedenen Zeitpunkt (t₂) mit einem zweiten Beleuchtungsmuster (16₂) zu beleuchten, um das zweite Spiegelungsmuster (22₂) zu erhalten;
so dass das erste Spiegelungsmuster (22₁) unter Verwendung einer ersten Relativposition zwischen einer ersten Beleuchtungsquelle (14₁) zum Erzeugen des ersten Spiegelungsmusters (22₁) einerseits und der Detektionsflächenanordnung (18) andererseits und bei der das zweite Spiegelungsmuster (22₂) unter Verwendung einer zweiten Relativposition zwischen einer zweiten Beleuchtungsquelle (14₂) zum Erzeugen des zweiten Spiegelungsmusters (22₂) einerseits und der Detektionsflächenanordnung (18) andererseits erhalten wird.

13. Verfahren (800) zur Erfassung von zumindest teilweise spiegelnden Oberflächen mit folgenden Merkmalen:
Anordnen (810) einer Detektionsflächenanordnung;
Aussenden (820) eines Beleuchtungsmusters in Richtung der zumindest teilweise spiegelnden Oberfläche, um per Spiegelung über die zumindest teilweise spiegelnde Oberfläche ein erstes Spiegelungsmuster und ein zweites Spiegelungsmuster auf die Detektionsflächenanordnung zu projizieren; und
Erfassen (830) des ersten Spiegelungsmusters und des zweiten Spiegelungsmusters von der Detektionsflächenanordnung;
Erfassen einer Detektionsfläche der Detektionsflächenanordnung von einer Seite, die einer Seite, von der das zweite Spiegelungsmuster an die Detektionsfläche gespiegelt wird, gegenüberliegend angeordnet ist.

## Claims

1. Apparatus (10; 30; 40; 70₁; 70₂) for capturing at least partially reflective surfaces (12), comprising:
a detection area arrangement (18);
a means for illumination (14) configured to emit an illumination pattern (16) towards the at least partially reflective surface (12) so as to project, through reflection via the at least partially reflective surface (12), a first reflection pattern (22₁) and a second reflection pattern (22₂) onto the detection area arrangement (18); and
a capturing unit (26) configured to capture the first reflection pattern (22₁) and the second reflection pattern (22₂) from the detection area arrangement (18);
wherein the apparatus is configured to generate the first reflection pattern (22₁) during a first time interval and the second reflection pattern (22₂) during a second time interval at the detection area arrangement (18), wherein the first time interval and the second time interval are temporally disjoint;
wherein the apparatus is configured to illuminate a surface point (P) of the at least partially reflective surface (12) of an object to be measured at a first point in time (t₁) with a first illumination pattern (16₁) so as to obtain the first reflection pattern (22₁); and to illuminate the surface point (P) at a second point in time (t₂), different from the first point in time, with a second illumination pattern (16₂) so as to obtain the second reflection pattern (22₂); wherein the first reflection pattern (22₁) is obtained by using a first relative position between a first illumination source (14₁) for generating the first reflection pattern (22₁) on the one hand and the detection area arrangement (18) on the other hand, and wherein the second reflection pattern (22₂) is obtained by using a second relative position between a second illumination source (14₂) for generating the second reflection pattern (22₂) on the one hand and the detection area arrangement (18) on the other hand.

2. Apparatus according to claim 1, wherein the detection area arrangement comprises a first detection area arranged at a first distance to a surface point (P) of the at least partially reflective surface (12) of an object to be measured, and comprises a second detection area (18₂) arranged at a second distance to the surface point (P) so that the illumination pattern (16), after reflection at the at least partially reflective surface (12), generates the first reflection pattern (22₁) upon impact at the first detection area (18₁) and generates the second reflection pattern (22₂) upon subsequent impact at the second detection area (18₂).

3. Apparatus according to claim 1, configured so that the first reflection pattern (22₁) and the second reflection pattern (22₂) are generated at a common detection area (18₁) of the detection area arrangement (18).

4. Apparatus according to any of the preceding claims, wherein the illumination pattern includes a line pattern, wherein an intensity progression (I) of the line pattern is variable along a progression (X) of the line.

5. Apparatus according to any of the preceding claims, further including a means for evaluation (48) configured to evaluate the at least partially reflective surface (12) through correlation of the first reflection pattern (22₁) and the second reflection pattern (22₂) for a mutual point (P) of the at least partially reflective surface (12).

6. Apparatus according to any of the preceding claims, wherein the means for illumination (14) is configured to emit the illumination pattern (16) by using a first wavelength range; wherein the detection area arrangement (18) is configured to transfer the first wavelength range into a second wavelength range so that the first reflection pattern (22₁) and/or second reflection pattern (22₂) can be captured by the capturing unit (26) in the second wavelength range.

7. Apparatus according to any of the preceding claims, wherein the detection area arrangement (18) is an active area of an image sensor (32) and wherein no imaging optics are arranged between the at least partially reflective surface (12) and the image sensor (32)

8. Apparatus (10; 30; 40; 70₁; 70₂) for capturing at least partially reflective surfaces (12), comprising:
a detection area arrangement (18);
a means for illumination (14) configured to emit an illumination pattern (16) towards the at least partially reflective surface (12) so as to project, through reflection via the at least partially reflective surface (12), a first reflection pattern (22₁) and a second reflection pattern (22₂) onto the detection area arrangement (18); and
a capturing unit (26) configured to capture the first reflection pattern (22₁) and the second reflection pattern (22₂) from the detection area arrangement (18);
wherein the capturing unit (26) is configured to capture a detection area (18₁) of the detection area arrangement (18) from a side arranged opposite to a side from which the second reflection pattern is reflected to the detection area.

9. Apparatus (10; 30; 40; 70₁; 70₂) for capturing at least partially reflective surfaces (12), comprising:
a detection area arrangement (18);
a means for illumination (14) configured to emit an illumination pattern (16) towards the at least partially reflective surface (12) so as to project, through reflection via the at least partially reflective surface (12), a first reflection pattern (22₁) and a second reflection pattern (22₂) onto the detection area arrangement (18); and
a capturing unit (26) configured to capture the first reflection pattern (22₁) and the second reflection pattern (22₂) from the detection area arrangement (18);
wherein the apparatus is configured so that the first reflection pattern (22₁) is generated at a first detection area (18₁) of the detection area arrangement (18) and the second reflection pattern (22₂) is generated at a second detection area (18₂) of the detection area arrangement (18), wherein the first detection area (18₁) and the second detection area are arranged to be offset along a relative movement direction (34) between the means for illumination (14) and the detection area arrangement (18) on the one hand and the at least partially reflective surface (12) on the other hand;
wherein a first distance (42₁) between the first detection area (18) and a first illumination source (14₁) for emitting a first illumination pattern (16₁) for obtaining the first reflection pattern (22₁) along the relative movement direction (34) differs from a second distance (42₂) between the second detection area (18₂) and a second illumination source (14₂) for emitting a second illumination pattern (16₂) for obtaining the second reflection pattern (22₂) along the relative illumination direction (34);
wherein the first illumination source (14₁) and the second illumination source (14₂) are configured to emit the first illumination pattern (16₁) and the second illumination pattern (16₂) along parallel directions (38₁, 38₂); and
wherein a main side (18A₂) of the second detection area (18₂) from which the second reflection pattern (22₂) is received faces a away from a main side (18A₁) of the first detection area (18₁) from which the first reflection pattern (22₁) is received.

10. Apparatus (10; 30; 40; 70₁; 70₂) for capturing at least partially reflective surfaces (12), comprising:
a detection area arrangement (18);
a means for illumination (14) configured to emit an illumination pattern (16) towards the at least partially reflective surface (12) so as to project, through reflection via the at least partially reflective surface (12), a first reflection pattern (22₁) and a second reflection pattern (22₂) onto the detection area arrangement (18); and
a capturing unit (26) configured to capture the first reflection pattern (22₁) and the second reflection pattern (22₂) from the detection area arrangement (18);
wherein a first illumination pattern (16₁) differs from a second illumination pattern (16₂) in a wavelength, wherein the wavelength of the first illumination pattern (16₁) is selected so that a body (64) comprising the at least partially reflective surface (12) is mostly transparent for the same, and wherein the wavelength of the second illumination pattern (16₂) is selected so that the body (64) comprising the at least partially reflective surface (12) is mostly nontransparent.

11. Measuring system with at least one apparatus for capturing at least partially reflective surfaces (12) according to any of claims 1 to 10, configured to measure a measuring object (64) with a surface to be captured.

12. Method (800) for capturing at least partially reflective surfaces, comprising:
arranging (810) a detection area arrangement;
emitting (820) an illumination pattern towards the at least partially reflective surface so as to project, through reflection via the at least partially reflective surface, a first reflection pattern and a second reflection pattern onto the detection area arrangement; and
capturing (830) the first reflection pattern and the second reflection pattern from the detection area arrangement;
so that the first reflection pattern (22₁) is generated during a first time interval and the second reflection pattern (22₂) during a second time interval at the detection area arrangement (18), so that the first time interval and the second time interval are temporally disjoint; the method further comprising:
illuminating a surface point (P) of the at least partially reflective surface (12) of an object to be measured at a first point in time (t₁) with a first illumination pattern (16₁) so as to obtain the first reflection pattern (22₁); and
illuminating the surface point (P) at a second point in time (t₂), different from the first point in time, with a second illumination pattern (16₂) so as to obtain the second reflection pattern (22₂);
so that the first reflection pattern (22₁) is obtained by using a first relative position between a first illumination source (14₁) for generating the first reflection pattern (22₁) on the one hand and the detection area arrangement (18) on the other hand, and wherein the second reflection pattern (22₂) is obtained by using a second relative position between a second illumination source (14₂) for generating the second reflection pattern (22₂) on the one hand and the detection area arrangement (18) on the other hand.

13. Method (800) for capturing at least partially reflective surfaces, comprising:
arranging (810) a detection area arrangement;
emitting (820) an illumination pattern towards the at least partially reflective surface so as to project, through reflection via the at least partially reflective surface, a first reflection pattern and a second reflection pattern onto the detection area arrangement; and
capturing (830) the first reflection pattern and the second reflection pattern from the detection area arrangement;
capturing a detection area of the detection area arrangement from a side arranged opposite to a side from which the second reflection pattern is reflected to the detection area.

## Revendications

1. Dispositif (10; 30; 40; 701; 702) de détection de surfaces au moins partiellement réfléchissantes (12) aux caractéristiques suivantes:
un aménagement de surfaces de détection (18);
un moyen d'éclairage (14) qui est conçu pour émettre un modèle d'éclairage (16) en direction de la surface au moins partiellement réfléchissante (12) pour projeter par réflexion sur la surface au moins partiellement réfléchissante (12) un premier modèle de réflexion (22₁) et un deuxième modèle de réflexion (22₂) sur l'aménagement de surfaces de détection (18); et
une unité de détection (26) qui est conçue pour capturer le premier modèle de réflexion (22₁) et le deuxième modèle de réflexion (22₂) de l'aménagement de surfaces de détection (18);
dans lequel le dispositif est conçu pour générer le premier modèle de réflexion (22₁) pendant un premier intervalle de temps et le deuxième modèle de réflexion (22₂) pendant un deuxième intervalle de temps sur l'aménagement de surfaces de détection (18), dans lequel le premier intervalle de temps et le deuxième intervalle de temps sont disjoints dans le temps;
dans lequel le dispositif est conçu pour éclairer un point de surface (P) de la surface au moins partiellement réfléchissante (12) d'un objet à mesurer à un premier moment (t₁) par un premier modèle d'éclairage (16₁) pour obtenir le premier modèle de réflexion (22₁); et pour éclairer le point de surface (P) par un deuxième modèle d'éclairage (16₂) à un deuxième moment (t₂), différent du premier moment, pour obtenir le deuxième modèle de réflexion (22₂); dans lequel le premier modèle de réflexion (22₁) est obtenu à l'aide d'une première position relative entre une première source d'éclairage (14₁) pour générer le premier modèle de réflexion (22i), d'une part, et l'aménagement de surfaces de détection (18), d'autre part, et dans lequel le deuxième modèle de réflexion (22₂) est obtenu à l'aide d'une deuxième position relative entre une deuxième source d'éclairage (14₂) pour générer le deuxième modèle de réflexion (22₂), d'une part, et l'aménagement de surfaces de détection (18), d'autre part.

2. Dispositif selon la revendication 1, dans lequel l'aménagement de surfaces de détection présente une première surface de détection qui est disposée à une première distance d'un point de surface (P) de la surface au moins partiellement réfléchissante (12) d'un objet à mesurer, et présente une deuxième surface de détection (18₂) qui est disposée à une deuxième distance du point de surface (P), de sorte que le modèle d'éclairage (16) génère, après la réflexion sur la surface au moins partiellement réfléchissante (12) lors de l'impact sur la première surface de détection (18₁), le premier modèle de réflexion (22₁) et génère, lors d'un impact successif sur la deuxième surface de détection (18₂), le deuxième modèle de réflexion (22₂).

3. Dispositif selon la revendication 1, qui est configuré de sorte que le premier modèle de réflexion (22₁) et le deuxième modèle de réflexion (22₂) soient générés sur une surface de détection commune (18₁) de l'aménagement de surfaces de détection (18).

4. Dispositif selon l'une des revendications précédentes, dans lequel le modèle d'éclairage comporte un modèle de ligne, dans lequel une évolution d'intensité (I) du modèle de ligne est variable le long d'une évolution (X) de la ligne.

5. Dispositif selon l'une des revendications précédentes, comportant par ailleurs un dispositif d'évaluation (48) qui est conçu pour évaluer la surface au moins partiellement réfléchissante (12) par corrélation du premier modèle réfléchissant (22₁) et du deuxième modèle réfléchissant (22₂) pour un point commun (P) de la surface au moins partiellement réfléchissante (12).

6. Dispositif selon l'une des revendications précédentes, dans lequel le moyen d'éclairage (14) est conçu pour émettre le modèle d'éclairage (16) à l'aide d'une première plage de longueurs d'onde; dans lequel l'aménagement de surfaces de détection (18) est conçu pour passer la première plage de longueurs d'onde à une deuxième plage de longueurs d'onde, de sorte que le premier modèle de réflexion (22₁) et/ou le deuxième modèle de réflexion (22₂) puissent être détectés dans la deuxième plage de longueurs d'onde par l'unité de détection (26).

7. Dispositif selon l'une des revendications précédentes, dans lequel l'aménagement de surfaces de détection (18) est une surface active d'un capteur d'images (32) et dans lequel aucune optique de reproduction n'est disposée entre la surface au moins partiellement réfléchissante (12) et le capteur d'images (32).

8. Dispositif (10; 30; 40; 70₁; 70₂) de détection de surfaces au moins partiellement réfléchissantes (12) aux caractéristiques suivantes:
un aménagement de surfaces de détection (18);
un moyen d'éclairage (14) qui est conçu pour émettre un modèle d'éclairage (16) en direction de la surface au moins partiellement réfléchissante (12) pour projeter par réflexion sur la surface au moins partiellement réfléchissante (12) un premier modèle de réflexion (22₁) et un deuxième modèle de réflexion (22₂) sur l'aménagement de surfaces de détection (18); et
une unité de détection (26) qui est conçue pour capturer le premier modèle de réflexion (22₁) et le deuxième modèle de réflexion (22₂) de l'aménagement de surfaces de détection (18);
dans lequel l'unité de détection (26) est conçue pour capturer une surface de détection (18₁) de l'aménagement de surfaces de détection (18) à partir d'un côté qui est disposé opposé à un côté à partir duquel le deuxième modèle de réflexion est réfléchi vers la surface de détection.

9. Dispositif (10; 30; 40; 70₁; 70₂) de détection de surfaces au moins partiellement réfléchissantes (12) aux caractéristiques suivantes:
un aménagement de surfaces de détection (18);
un moyen d'éclairage (14) qui est conçu pour émettre un modèle d'éclairage (16) en direction de la surface au moins partiellement réfléchissante (12) pour projeter par réflexion sur la surface au moins partiellement réfléchissante (12) un premier modèle de réflexion (22₁) et un deuxième modèle de réflexion (22₂) sur l'aménagement de surfaces de détection (18); et
une unité de détection (26) qui est conçue pour capturer le premier modèle de réflexion (22₁) et le deuxième modèle de réflexion (22₂) de l'aménagement de surfaces de détection (18);
dans lequel le dispositif est conçu de sorte que le premier modèle de réflexion (22₁) soit généré sur une première surface de détection (18₁) de l'aménagement de surfaces de détection (18) et le deuxième modèle de réflexion (22₂) soit généré sur une deuxième surface de détection (18₂) de l'aménagement de surfaces de détection (18), dans lequel la première surface de détection (18₁) et la deuxième surface de détection sont disposées de manière décalée l'une par rapport à l'autre, le long d'une direction de déplacement relatif (34) entre le moyen d'éclairage (14) et l'aménagement de surfaces de détection (18), d'une part, et la surface au moins partiellement réfléchissante (12), d'autre part;
dans lequel une première distance (42₁) entre la première surface de détection (18₁) et une première source d'éclairage (14₁) destinée à émettre un premier modèle d'éclairage (16₁) pour obtenir le premier modèle de réflexion (22₁) le long de la direction de déplacement relative (34) est différente d'une deuxième distance (42₂) entre la deuxième surface de détection (18₂) et une deuxième source d'éclairage (14₂) destinée à émettre un deuxième modèle d'éclairage (16₂) pour obtenir le deuxième modèle de réflexion (22₂) le long de la direction d'éclairage relative (34);
dans lequel la première source d'éclairage (14₁) et la deuxième source d'éclairage (14₂) sont conçues pour émettre le premier modèle d'éclairage (16₁) et le deuxième modèle d'éclairage (16₂) le long de directions parallèles entre elles (38₁, 38₂); et
dans lequel un côté principal (18A₂) de la deuxième surface de détection (18₂) duquel est reçu le deuxième modèle de réflexion (22₂) est opposé à un côté principal (18A₁) de la première surface de détection (18₁) duquel est reçu le premier modèle de réflexion (22₁).

10. Dispositif (10; 30; 40; 70₁; 70₂) de détection de surfaces au moins partiellement réfléchissantes (12) aux caractéristiques suivantes:
un aménagement de surfaces de détection (18);
un moyen d'éclairage (14) qui est conçu pour émettre un modèle d'éclairage (16) en direction de la surface au moins partiellement réfléchissante (12) pour projeter par réflexion sur la surface au moins partiellement réfléchissante (12) un premier modèle de réflexion (22₁) et un deuxième modèle de réflexion (22₂) sur l'aménagement de surfaces de détection (18); et
une unité de détection (26) qui est conçue pour capturer le premier modèle de réflexion (22₁) et le deuxième modèle de réflexion (22₂) de l'aménagement de surfaces de détection (18);
dans lequel un premier modèle d'éclairage (16₁) diffère d'un deuxième modèle d'éclairage (16₂) par une longueur d'onde, dans lequel la longueur d'onde du premier modèle d'éclairage (16₁) est choisie de sorte qu'un corps (64) présentant la surface au moins partiellement réfléchissante (12) soit principalement transparent à cet effet, et dans lequel la longueur d'onde du deuxième modèle d'éclairage (16₂) est choisie de sorte qu'un corps (64) présentant la surface au moins partiellement réfléchissante (12) soit principalement non transparent.

11. Système de mesure avec au moins un dispositif destiné à détecter des surfaces au moins partiellement réfléchissantes (12) selon l'une des revendications 1 à 10 qui est conçu pour mesurer un objet de mesure (64) avec une surface à détecter.

12. Procédé (800) de détection de surfaces au moins partiellement réfléchissantes aux caractéristiques suivantes consistant à:
disposer (810) un aménagement de surfaces de détection;
émettre (820) un modèle d'éclairage en direction de la surface au moins partiellement réfléchissante pour projeter par réflexion sur la surface au moins partiellement réfléchissante un premier modèle de réflexion et un deuxième modèle de réflexion sur l'aménagement de surfaces de détection; et
capturer (830) le premier modèle de réflexion et le deuxième modèle de réflexion de l'aménagement de surfaces de détection;
de sorte que le premier modèle de réflexion (22₁) soit généré pendant un premier intervalle de temps et que le deuxième modèle de réflexion (22₂) soit généré pendant un deuxième intervalle de temps sur l'aménagement de surfaces de détection (18), de sorte que le premier intervalle de temps et le deuxième intervalle de temps soient disjoints dans le temps; où le procédé présente par ailleurs le fait de:
éclairer un point de surface (P) de la surface au moins partiellement réfléchissante (12) d'un objet à mesurer à un premier moment (t₁) par un premier modèle d'éclairage (16₁) pour obtenir le premier modèle de réflexion (22₁); et
éclairer le point de surface (P) à un deuxième moment (t₂), différent du premier moment, par un deuxième modèle d'éclairage (1.6₂) pour obtenir le deuxième modèle de réflexion (22₂);
de sorte que le premier modèle de réflexion (22₁) soit obtenu à l'aide d'une première position relative entre une première source d'éclairage (14i) pour générer le premier modèle de réflexion (22i), d'une part, et l'aménagement de surfaces de détection (18), d'autre part, et dans lequel le deuxième modèle de réflexion (22₂) est obtenu à l'aide d'une deuxième position relative entre une deuxième source d'éclairage (14₂) pour générer le deuxième modèle de réflexion (22₂), d'une part, et l'aménagement de surfaces de détection (18), d'autre part.

13. Procédé (800) de détection de surfaces au moins partiellement réfléchissantes aux caractéristiques suivantes consistant à:
disposer (810) un aménagement de surfaces de détection;
émettre (820) un modèle d'éclairage en direction de la surface au moins partiellement réfléchissante pour projeter par réflexion sur la surface au moins partiellement réfléchissante un premier modèle de réflexion et un deuxième modèle de réflexion sur l'aménagement de surfaces de détection; et
capturer (830) le premier modèle de réflexion et le deuxième modèle de réflexion de l'aménagement de surfaces de détection;
détecter une surface de détection de l'aménagement de surfaces de détection à partir d'un côté qui est disposé opposé à un côté à partir duquel le deuxième modèle de réflexion est réfléchi sur la surface de détection.
